# EUROPEAN PATENT APPLICATION

(11) **EP 4 625 645 A1**
(43) Date of publication of application: **01.10.2025**
(21) Application number: 23936427.6
(22) Date of filing: 17.11.2023
(51) Int. Cl.: H01M 50/209, H01M 10/04, H01M 10/613

(54) **BATTERY AND ELECTRIC DEVICE HAVING SAME**

(30) Priority: 08.05.2023 CN 202310511048
(71) Applicant: Contemporary Amperex Technology Co., Limited, Ningde, Fujian 352100 (CN)
(72) Inventor: JIN, Haizu, Ningde, Fujian 352100 (CN); HAN, Fengsheng, Ningde, Fujian 352100 (CN); YE, Weiqing, Ningde, Fujian 352100 (CN); LI, Ting, Ningde, Fujian 352100 (CN)
(74) Representative: Ran, Handong
(86) International application number: PCT/CN2023/132416
(87) International publication number: WO 2024/230123

(57) **Abstract**

A battery (200) and an electric apparatus (1000) having the same are provided, where the battery (200) includes at least two first battery cells (10), each first battery cell (10) is provided with multiple sidewalls (11), the multiple sidewalls (11) include a first sidewall (111), the first sidewall (111) is the sidewall with the largest area of the first battery cell, the first sidewalls (111) of at least two first battery cells (10) are arranged opposite each other in a first direction and arranged offset from each other in a second direction, the first direction and the second direction are perpendicular to each other, and the first direction are perpendicular to the first sidewall (111).

## Description

### CROSS-REFERENCE TO RELATED APPLICATIONS

This application is based on and claims priority to Chinese Patent Application No. 202310511048.8, filed on May 8, 2023, the entire contents of which are incorporated herein by reference.

### TECHNICAL FIELD

This application relates to the field of battery technologies, and in particular, to a battery and an electric apparatus having the same.

### BACKGROUND TECHNOLOGY

In recent years, new energy vehicles have experienced rapid development. In the field of electric vehicles, a battery serves as the power source of an electric vehicle, playing an irreplaceable and important role. Typically, a battery includes multiple battery cells. When a thermal runaway occurs in a battery cell, the heat from that battery cell transfers significantly to the remaining individual battery cells, easily causing thermal runaway in adjacent battery cells, leading to thermal diffusion among the battery cells inside the battery.

### SUMMARY

This application provides a battery and an electric apparatus having the same, capable of suppressing thermal diffusion in the battery and enhancing the reliability of use of the battery.

According to a first aspect, an embodiment of this application provides a battery, where the battery includes at least two first battery cells. Each first battery cell is provided with multiple sidewalls, the multiple sidewalls include a first sidewall, the first sidewall is a sidewall with the largest area of the first battery cell, the first sidewalls of at least two first battery cells are arranged opposite each other in a first direction and arranged offset from each other in a second direction, the first direction and the second direction are perpendicularly arranged, and the first direction is perpendicular to the first sidewall.

In the above technical solution, at least two first battery cells are arranged offset from each other, which is conducive to fully utilizing the arrangement space of the battery and enhancing the adaptability of multiple first battery cells to arrangement spaces of different shapes; in addition, the offset arrangement of two first battery cells reduces the heat transfer from any one first battery cell toward another opposite first battery cell, so that when a thermal runaway occurs in a first battery cell, the heat transferred from the thermally runaway first battery cell to an adjacent first battery cell can be reduced, lowering the probability of thermal runaway in the adjacent first battery cell, thereby achieving the purpose of suppressing thermal diffusion and enhancing the reliability of use of the battery.

In some embodiments, at least two first sidewalls offset from each other are thermally conductively connected.

In the above technical solution, at least two first sidewalls offset from each other are thermally conductively connected, which is conducive to appropriately increasing the heat transfer efficiency between the two first battery cells offset from each other to allow the internal heat of the battery to be dissipated more quickly. This is conducive to the thermal management control of the battery.

In some embodiments, a thermally conductive adhesive layer is provided between at least two of the first sidewalls offset from each other.

In the above technical solution, a thermally conductive adhesive layer is provided between at least two first sidewalls offset from each other, which is conducive to further appropriately increasing the heat conduction rate between the first battery cells offset from each other, facilitating appropriate heat dissipation during the operation of the first battery cells and achieving thermal management of the battery.

In some embodiments, in the second direction, an overlapping area of an overlapping portion between two first battery cells offset from each other is denoted as L1, an area of the first sidewall is denoted as L2, and a ratio of L1 to L2 ranges from 2/9 to 7/9.

In the above technical solution, the ratio L1/L2 of the overlapping area of the overlapping portion between two first battery cells offset from each other to the area of the first sidewall is set to be within the range of 2/9 to 7/9, which allows the two first battery cells offset from each other to have an appropriate facing region in the first direction, so that each of the two first battery cells offset from each other to transfer appropriate heat to different positions and components, thereby balancing temperature control and thermal management of the first battery cells under the premise of controlling thermal diffusion. This is conducive to enhancing the performance of the battery. Furthermore, the flexible setting of the overlapping area size facilitates further adaptation of the battery to its arrangement space.

In some embodiments, the ratio of L1 to L2 ranges from 5/13 to 8/13.

In the above technical solution, the ratio L1/L2 of the overlapping area of the overlapping portion between two first battery cells offset from each other to the area of the first sidewall is set to be within the range of 5/13 to 8/13, which is conducive to further balancing the suppression of internal thermal diffusion in the battery and the thermal management of the battery, enhancing the performance of the battery.

In some embodiments, the battery includes multiple rows of battery units, each row of battery units includes multiple first battery cells, multiple rows of battery units are sequentially arranged in the first direction, and the first sidewalls opposite each other in the first direction in at least two adjacent rows of battery units are arranged offset from each other.

In the above technical solution, the first sidewalls opposite each other in at least two adjacent rows of battery units in the first direction are arranged offset from each other, which reduces the probability of a thermally runaway battery unit causing thermal runaway in an adjacent row of battery units, thereby further controlling thermal diffusion between adjacent rows of battery units.

In some embodiments, each first battery cell includes a second sidewall connected to the first sidewall, each first battery cell being thermally conductively connected to an adjacent first battery cell through at least one first sidewall and at least one second sidewall.

In the above technical solution, each first battery cell is thermally conductively connected to an adjacent first battery cell through at least one first sidewall and at least one second sidewall, so that each first battery cell can transfer heat to adjacent first battery cells through at least one first sidewall and at least one second sidewall, facilitating heat transfer from each first battery cell to different first battery cells via the first sidewall and the second sidewall. For example, each first battery cell can transfer heat to at least two adjacent first battery cells through the first sidewall and the second sidewall to achieve dispersed heat transfer for each first battery cell, which is conducive to enhancing the suppression of thermal diffusion.

In some embodiments, the battery further includes a box, where the multiple rows of battery units are disposed within the box, and multiple first battery cells in each row of battery units are sequentially arranged in the second direction, the second direction being parallel to a length direction of the box.

In the above technical solution, multiple first battery cells in each row of battery units are arranged sequentially in the second direction, with the second direction parallel to the length direction of the box, which facilitates the box providing a suitable arrangement space for the battery units, simplifying the installation of the battery units.

In some embodiments, partition plates are provided within the box to define multiple accommodation chambers, each accommodation chamber containing at least two rows of battery units offset from each other.

In the above technical solution, partition plates are provided within the box to define multiple accommodation chambers, with each accommodation chamber containing at least two rows of battery units offset from each other, which facilitates grouped assembly of multiple first battery cells of the battery, improving the assembly convenience of the battery, while the partition plates can play the role of structural reinforcement to the box to some extent, enhancing the reliability of use of the box.

In some embodiments, the partition plates are thermally conductively connected to adjacent battery units, and the partition plates are thermally conductively connected to the box.

In the above technical solution, the partition plates are thermally conductively connected to adjacent battery units and to the box, so that for the outermost battery unit in the first direction, its heat can be transferred not only to an adjacent row of battery units but also to the partition plate and subsequently to the box, further achieving dispersed heat transfer of the battery unit, which is conducive to enhancing the thermal management effect of the battery.

In some embodiments, the first sidewalls opposite each other in any two adjacent rows of battery units are arranged offset from each other.

In the above technical solution, the first sidewalls opposite each other in any two adjacent rows of battery units are arranged offset from each other, which facilitates the heat generated by each first battery cell to be directly and/or indirectly dispersed and transferred to more adjacent first battery cells, further enhancing the thermal management effect of the battery.

In some embodiments, the first battery cells offset from each other in adjacent rows are electrically connected through a busbar.

In the above technical solution, the busbar connects the first battery cells offset from each other in adjacent rows, which facilitates adjustment of the arrangement length and posture of the busbar by setting the offset distance between the two first battery cells offset from each other, enhancing the flexibility of the busbar arrangement.

In some embodiments, the busbar includes a transition portion and two electrical connection portions. Two ends of the transition portion are connected to the two electrical connection portions respectively, and an extension direction of the transition portion forms an angle with both the first direction and the second direction. The two electrical connection portions are electrically connected to two first battery cells respectively.

In the above technical solution, the busbar includes a transition portion and two electrical connection portions, with the extension direction of the transition portion forming an angle with both the first direction and the second direction, and the two electrical connection portions being electrically connected to two first battery cells respectively, which achieves an angled arrangement of the transition portion of the busbar under the premise of electrically connecting the two first battery cells. This is conducive to reducing the length of the transition portion, thereby shortening the current path, effectively reducing heat generation due to continuous overcurrent, reducing heat production. In addition, due to the shorter span of the busbar, this is conducive to implementing an offset arrangement of the busbar and a pressure relief structure of the first battery cell, lowering the probability of the busbar obstructing the pressure relief structure and reducing safety risks.

In some embodiments, the transition portion is provided with a stretchable and deformable buffer portion.

In the above technical solution, a stretchable and deformable buffer portion is provided in the transition portion, which allows the busbar to mitigate stress caused by the expansion of the first battery cell during use of the battery (for example, in later stages of usage), where the buffer portion can undergo certain stretching deformation following the expansion of the first battery cell, reducing the pulling force of the busbar on a pole of the first battery cell, while the tensile force borne by the busbar is decreased, lowering the risk of the busbar being torn apart and enhancing the reliability of use of the battery.

In some embodiments, a stretchable and deformable buffer portion is connected between each electrical connection portion and the transition portion.

In the above technical solution, a stretchable and deformable buffer portion is provided between each electrical connection portion and the transition portion, which facilitates multi-stage relief of stress caused by the expansion of the first battery cell, enhancing the adaptability of the busbar to the expansion and deformation of the first battery cell and further improving the performance of the battery.

In some embodiments, the buffer portion includes a bent portion having at least an opening.

In the above technical solution, the buffer portion includes a bent portion having at least an opening, which allows the bent portion to relieve stress by changing the width of the opening under external force, with the bent portion having a simple structure and being easy to process.

In some embodiments, the transition portion is provided with a reinforcement member, where the reinforcement member is a member made of conductive material.

In the above technical solution, a reinforcement member made of a conductive material is provided in the transition portion, which can increase the current-carrying area of the transition portion to enhance the current-carrying capacity of the busbar, thereby further mitigating temperature rise caused by overcurrent and improving the performance of the battery.

In some embodiments, the reinforcement member and the transition portion are arranged in a stacked manner.

In the above technical solution, the reinforcement member and the transition portion are arranged in a stacked manner, allowing the busbar to be roughly designed as a laminate, which can appropriately increase the thickness of the busbar in the region corresponding to the transition portion, thereby enhancing the current-carrying capacity of the busbar without significantly increasing the space occupied by the busbar in the first direction and the second direction.

In some embodiments, the battery further includes a box, where multiple rows of battery units are disposed within the box, and an offset space is provided between the adjacent rows of battery units offset from each other and an inner wall of the box, with a filler provided within the offset space.

In the above technical solution, an offset space is provided between the adjacent rows of battery units offset from each other and the inner wall of the box, with a filler provided in the offset space, to effectively reduce the space loss in the battery due to the offset arrangement of adjacent rows of battery units, and the residual design space of the battery is rationally utilized, thereby enhancing the space utilization rate of the battery.

In some embodiments, the filler includes a second battery cell, where the second battery cell is disposed within the offset space and electrically connected to the first battery cell.

In the above technical solution, a second battery cell is disposed within the offset space to effectively utilize the offset space created by the offset arrangement of multiple first battery cells, enhancing the space utilization rate of the battery and increasing the volumetric energy density and gravimetric energy density of the battery.

In some embodiments, a volume of the second battery cell is smaller than a volume of the first battery cell.

In the above technical solution, the volume of the second battery cell is set to be smaller than the volume of the first battery cell, which is conducive to matching the volume of the second battery cell to the capacity of the offset space. Because the offset space is formed by the cooperation between adjacent rows of battery units offset from each other and the box, the capacity of the offset space is typically smaller than the volume of the first battery cell. This is conducive to improving the matching between the second battery cell and the offset space, facilitating the arrangement of the second battery cell.

In some embodiments, in the second direction, a sidewall of the second battery cell is flush with an end face of a battery unit in an adjacent row.

In the above technical solution, the sidewall of the second battery cell is flush with the end face of a battery unit in an adjacent row in the second direction, so that a battery group formed by the second battery cell and the aligned battery unit can be more regularly arranged with the adjacent battery units, which is conducive to simplifying a shape of an internal space of the box and rationally utilizing the internal space of the box.

In some embodiments, the first battery cell and the second battery cell are electrically connected at least in series, where a chemical system of the second battery cell differs from a chemical system of the first battery cell.

In the above technical solution, a chemical system of the second battery cell differs from a chemical system of the first battery cell, which allows the second battery cell and the first battery cell to be different in performance; and the first battery cell and the second battery cell are electrically connected at least in series, which is conducive to improving the overall performance of the battery through the second battery cell. For example, if the second battery cell selected with an appropriate chemical system has a higher low-temperature discharge specific power density compared to the first battery cell, the above connection method enables the discharge capability of the battery at low temperatures to be enhanced and is conducive to simplifying the electrical connection method of the battery and the structural design of the battery.

In some embodiments, the filler includes a monitor configured to monitor the operating status of each of the first battery cells.

In the above technical solution, the filler including a monitor is provided, and the monitor is configured to monitor the operating status of each of the first battery cells, which facilitates the placement of the monitor while enhancing the operational safety of the battery.

In some embodiments, the filler includes a thermally conductive filler member thermally conductively connected to the box, where the thermally conductive filler member is configured to direct heat from a corresponding first battery cell to the box.

In the above technical solution, the filler includes a thermally conductive filler member configured to direct heat from a corresponding first battery cell to the box, which further enhances the dispersed transfer of heat from the first battery cell, thereby further suppressing thermal diffusion.

In some embodiments, the battery further includes a thermally conductive reinforcement member and a box, where at least two first battery cells are disposed within the box, at least one first battery cell is thermally conductively connected to the thermally conductive reinforcement member, and the thermally conductive reinforcement member is thermally conductively connected to the box.

In the above technical solution, the thermally conductive reinforcement member is thermally conductively connected to at least one first battery cell and to the box, which allows the thermally conductive reinforcement member to direct heat from at least one first battery cell to the box, further enhancing the dispersed transfer of heat from the first battery cell and suppressing thermal diffusion. In addition, the thermally conductive reinforcement member provides a certain structural reinforcement to the first battery cell and/or the box, enhancing the reliability of use of the battery.

In some embodiments, the thermally conductive reinforcement member is sandwiched between first battery cells opposite each other in the first direction, where the thermally conductive reinforcement member is thermally conductively connected to the first sidewall of a corresponding first battery cell.

In the above technical solution, the thermally conductive reinforcement member are thermally conductively connected to the first sidewalls of first battery cells opposite each other in the first direction, which facilitates increasing the heat exchange area between the thermally conductive reinforcement member and the corresponding first battery cell, thereby enhancing the heat transfer efficiency between the thermally conductive reinforcement member and the first battery cell and improving the temperature control effect of the battery. Furthermore, the thermally conductive reinforcement member provides a certain reinforcement to the first sidewall of the corresponding first battery cell, increasing the deformation resistance of the first sidewall of the corresponding first battery cell, thereby reducing the probability of issues such as local lithium precipitation or thermal runaway due to uneven stress on the first battery cell.

In some embodiments, a cavity configured to buffer stress is provided within the thermally conductive reinforcement member.

In the above technical solution, a cavity configured to buffer stress is provided within the thermally conductive reinforcement member. Because of the provision of the cavity, the thermally conductive reinforcement member can deform when subjected to the force from an expanding first battery cell during use, reducing the squeezing force between the thermally conductive reinforcement member and the first battery cell, avoiding damage to the thermally conductive reinforcement member and the first battery cell, and enhancing the reliability of the thermally conductive reinforcement member and the first battery cell. In addition, the cavity facilitates the absorption of assembly tolerances for the first battery cells arranged in rows during the assembly of the thermally conductive reinforcement member and the first battery cells, improving the assembly convenience of the thermally conductive reinforcement member and the first battery cell. Furthermore, the provision of the cavity reduces the weight of the thermally conductive reinforcement member, thereby reducing the weight of the battery and increasing the gravimetric energy density of the battery.

In some embodiments, the thermally conductive reinforcement member includes two thermally conductive sidewalls opposite each other, where the thermally conductive sidewall is thermally conductively connected to the opposite first sidewalls, and a support structure respectively connected to the two thermally conductive sidewalls is provided within the cavity.

In the above technical solution, a support structure respectively connected to the two thermally conductive sidewalls is provided within the cavity, which allows the support structure to support the two thermally conductive sidewalls, increasing the resistance of the thermally conductive reinforcement member to bending deformation and enhancing the reliability of the thermally conductive reinforcement member.

In some embodiments, the support structure is formed as a mesh structure, with a heat-absorbing material member filled within the mesh structure.

In the above technical solution, the support structure is provided as a mesh structure, with a heat-absorbing material member provided within the cavity, which reduces the obstruction of the support structure to the heat-absorbing material member. This is conducive to enhancing the filling capacity of the heat-absorbing material member in the cavity, facilitating contact between the heat-absorbing material member and the thermally conductive sidewalls to improve thermal conductivity. This is also conducive to reducing the requirements on the physical state of the heat-absorbing material member, and the requirements for the physical state change of the heat-absorbing material member can be lowered if the heat-absorbing material member undergoes a physical state change during heat absorption.

In some embodiments, the battery further includes a heat exchange plate and a thermally conductive insert, where in a third direction, the heat exchange plate is located on one side of at least two first battery cells, the third direction being perpendicular to the first direction and the second direction respectively; and a heat exchange channel configured to accommodate a heat exchange medium is provided within the heat exchange plate, and the insert is disposed on a surface of the heat exchange plate close to the first battery cell and thermally conductively connected to the first battery cell.

In the above technical solution, a heat exchange plate and an insert are provided, with a heat exchange channel configured to accommodate a heat exchange medium within the heat exchange plate and the insert thermally conductively connected to the first battery cell, so that the heat exchange plate can exchange heat with the first battery cell at least through the insert, further reducing the heat transferred from the first battery cell to other first battery cells, thereby further suppressing thermal diffusion.

In some embodiments, the first sidewall of at least one first battery cell is thermally conductively connected to the insert.

In the above technical solution, the insert is thermally conductively connected to the first sidewall of at least one first battery cell, which facilitates increasing the heat exchange area between the insert and the corresponding first battery cell, enhancing the heat transfer efficiency between the insert and the first battery cell and improving the temperature control effect of the battery. In addition, the insert provides a certain reinforcement to the first sidewall of the corresponding first battery cell, increasing the deformation resistance of the first sidewall of the corresponding first battery cell, thereby reducing the probability of issues such as local lithium precipitation or thermal runaway due to uneven stress on the first battery cell.

In some embodiments, the insert and the heat exchange plate form an integrated structural member.

In the above technical solution, the insert and the heat exchange plate are provided as an integrated structural member, which facilitates enhancing the strength of the insert and the heat exchange plate, eliminating the connection process between the insert and the heat exchange plate, and improving the assembly efficiency of the battery.

In some embodiments, the battery further includes a fixing bracket configured to restrict displacement of each first battery cell.

In the above technical solution, a fixing bracket configured to restrict displacement of each of the first battery cells is provided to impose a certain limitation on each first battery cell, increasing the structural strength between multiple first battery cells, facilitating the formation of a stable whole by the multiple first battery cells, and enhancing the reliability of the battery.

In some embodiments, the battery includes multiple rows of battery units, each row of battery units includes multiple first battery cells, multiple rows of battery units are sequentially arranged in the first direction, each row of battery units is correspondingly provided with the fixing bracket, and multiple first battery cells of each row of battery units are mounted to the fixing bracket.

In the above technical solution, each row of battery units is correspondingly provided with the fixing bracket, and multiple first battery cells of each row of battery units are mounted to the fixing bracket to match the arrangement of the fixing bracket with the arrangement of the battery units. In this way, the fixing bracket can impose a certain limitation on each first battery cell in each row of battery units, enhancing the overall reliability of the battery, while the arrangement of the fixing bracket does not affect the relative arrangement between the first battery cells of two adjacent rows of battery units.

In some embodiments, each fixing bracket includes: a connecting bracket, where the connecting bracket is provided with multiple clearance openings configured to accommodate poles of the first battery cells; and multiple extension brackets, where the multiple extension brackets are spaced apart and disposed on the connecting bracket, each extension bracket is provided with a stopper plate, the first battery cell is disposed between adjacent extension brackets, and the stopper plate abuts against the first sidewall.

In the above technical solution, the connecting bracket is configured with multiple clearance openings to accommodate poles of the first battery cells, which allows the poles to fit within the clearance openings, with the poles spaced from the peripheral wall of the clearance openings, preventing interference between the connecting bracket and the poles. In addition, a certain spacing is maintained between the poles and the connecting bracket, which is conducive to enhancing the insulation performance between the connecting bracket and the poles. The first battery cells are placed between adjacent extension brackets, facilitating restricting the displacement of the corresponding first battery cells in the second direction through the two adjacent extension brackets. The stopper plate abuts against the first sidewall, allowing the stopper plate to restrict the displacement of the corresponding first battery cells in the first direction.

According to a second aspect, an embodiment of this application further provides an electric apparatus, including the battery described above, where the battery is configured to provide electrical energy.

In the above technical solution, because the electric apparatus is provided with the battery described above, and the thermal diffusion of the battery is easy to control, it is conducive to enhancing the reliability of use of the electric apparatus.

### BRIEF DESCRIPTION OF DRAWINGS

The above and/or additional aspects and advantages of this application will become apparent and easily understood from the description of embodiments in conjunction with the following drawings, where:
FIG. 1 is a schematic structural diagram of a vehicle according to some embodiments of this application;
FIG. 2 is an exploded structural diagram of a battery according to some embodiments of this application;
FIG. 3 is a schematic structural diagram of a first battery cell according to some embodiments of this application;
FIG. 4 is a schematic structural diagram of a battery according to some embodiments of this application;
FIG. 5 is a schematic diagram of orthographic projections of two first sidewalls offset from each other in the first direction in FIG. 4;
FIG. 6 is a schematic structural diagram of a battery according to some embodiments of this application;
FIG. 7 is a schematic structural diagram of a battery according to some embodiments of this application;
FIG. 8 is a schematic structural diagram of a battery according to some embodiments of this application;
FIG. 9 is a schematic diagram of a busbar according to some embodiments of this application;
FIG. 10 shows multiple additional schematic diagrams of the busbar shown in FIG. 9;
FIG. 11 is a schematic diagram of a busbar according to some embodiments of this application;
FIG. 12 is a schematic structural diagram of a battery according to some embodiments of this application;
FIG. 13 is an enlarged view of portion A circled in FIG. 12;
FIG. 14 shows multiple schematic diagrams of a battery according to some embodiments of this application;
FIG. 15 is a schematic structural diagram of a battery according to some embodiments of this application;
FIG. 16 is a schematic structural diagram of a battery according to some embodiments of this application;
FIG. 17 is another schematic diagram of the battery shown in FIG. 16;
FIG. 18 shows multiple schematic diagrams of a battery according to some embodiments of this application;
FIG. 19 shows multiple schematic diagrams of a battery according to some embodiments of this application;
FIG. 20 is a schematic structural diagram of a battery according to some embodiments of this application;
FIG. 21 is an enlarged view of portion B circled in FIG. 20;
FIG. 22 is a schematic diagram of a heat exchange plate and an insert according to some embodiments of this application;
FIG. 23 is a schematic diagram of a heat exchange channel of the heat exchange plate shown in FIG. 22;
FIG. 24 is a schematic structural diagram of a battery according to some embodiments of this application;
FIG. 25 is an enlarged view of portion C circled in FIG. 24;
FIG. 26 is a schematic diagram of a fixing bracket shown in FIG. 24; and
FIG. 27 is an enlarged view of portion D circled in FIG. 26.

Reference signs:
electric apparatus 1000, battery 200, controller 300, motor 400,
first direction X, second direction Y, third direction Z,
first battery cell 10, battery unit 10A, sidewall 11, first sidewall 111, second sidewall 112, pole 12, pressure relief structure 13,
box 30, accommodation chamber 30a, offset space 30b, first box portion 301, second box portion 302,
partition plate 40,
busbar 50, transition portion 51, electrical connection portion 52, buffer portion 53, opening 530, bent portion 531, first segment 5311, second segment 5312, reinforcement member 54,
filler 60, second battery cell 61, monitor 62, air pressure sensor 621, lithium precipitation monitor 622, thermally conductive filler member 63,
thermally conductive reinforcement member 70, cavity 70a, thermally conductive sidewall 71,
support structure 80, heat-absorbing material member 90, heat exchange plate 100, heat exchange channel 100a, insert 110,
fixing bracket 120, connecting bracket 121, clearance opening 121a, reinforcement plate 1211, enclosure plate 1212, extension bracket 122, stopper plate 123, and second busbar 130.

### DESCRIPTION OF EMBODIMENTS

To make the objectives, technical solutions, and advantages of the embodiments of this application clearer, the technical solutions in the embodiments of this application are clearly described below in conjunction with the drawings in the embodiments of this application. Obviously, the described embodiments are a part of the embodiments of this application, not all embodiments. Based on the embodiments in this application, all other embodiments obtained by those of ordinary skill in the art without creative effort fall within the scope of protection of this application.

Unless otherwise defined, all technical and scientific terms used in this application have the same meanings as commonly understood by those skilled in the technical field of this application; the terms used in the specification of this application are solely for the purpose of describing specific embodiments and are not intended to limit this application; the terms "including" and "having" and any variations thereof in the specification, claims, and the above description of drawings of this application are intended to cover non-exclusive inclusion. The terms "first, " "second, " and the like in the specification and claims or the above drawings of this application are used to distinguish different objects, not to describe a specific order or primary-secondary relationship.

Reference to "embodiment" in this application means that a specific feature, structure, or characteristic described in connection with the embodiment may be included in at least one embodiment of this application. The appearance of this phrase in various places in the specification does not necessarily refer to the same embodiment, nor does it represent an independent or alternative embodiment mutually exclusive with other embodiments.

The term "and/or" in this application is merely an association relationship describing associated objects, indicating that three relationships may exist; for example, A and/or B may indicate: A exists alone, A and B exist simultaneously, and B exists alone. In addition, the character "/" in this application generally indicates an "or" relationship between the associated objects before and after.

In the embodiments of this application, the same reference signs denote the same components, and for brevity, detailed descriptions of the same components are omitted in different embodiments. It should be understood that the thickness, length, width, and other dimensions of various components in the embodiments of this application shown in the drawings, as well as the overall thickness, length, width, and other dimensions of an integrated device, are merely illustrative and should not constitute any limitation to this application.

The term "multiple" appearing in this application refers to two or more (including two).

In this application, the battery cell may include a lithium-ion secondary battery, a lithium-ion primary battery, a lithium-sulfur battery, a sodium-lithium-ion battery, a sodium-ion battery, a magnesium-ion battery, or the like. This is not limited in the embodiments of this application. The battery cell may be cylindrical, flat, cuboid, or of other shapes, which is not limited in the embodiments of this application either. Battery cells are typically divided into three types by packaging method: cylindrical cell, prismatic cell, and pouch cell. This is not limited in the embodiments of this application either.

The battery mentioned in the embodiments of this application is a single physical module that includes multiple battery cells for providing higher voltage and capacity. For example, the battery mentioned in this application may be a battery module or a battery group, or the like. A battery module generally includes multiple battery cells. A battery generally includes a box configured to enclose multiple battery cells or multiple battery modules, where the box can prevent liquids or other foreign objects from affecting charging or discharging of the battery cells. Of course, the battery may alternatively not include a box.

As an example, a battery cell typically includes a housing, a cell assembly, and an electrolyte, where the housing is configured to accommodate the cell assembly and the electrolyte, and the housing is provided with at least one positive electrode pole and at least one negative electrode pole. The cell assembly includes one or more electrode assemblies, where an electrode assembly is formed by stacking or winding a positive electrode plate, a negative electrode plate, and a separator.

The positive electrode plate generally includes a positive electrode current collector and a positive electrode active material layer, where the positive electrode active material layer is directly or indirectly coated on the positive electrode current collector, the positive electrode current collector not coated with the positive electrode active material layer protrudes from the positive electrode current collector coated with the positive electrode active material layer, and the positive electrode current collector not coated with the positive electrode active material layer serves as a positive electrode tab; multiple positive electrode tabs are stacked together and electrically connected to the positive electrode pole. As an example, the multiple positive electrode tabs stacked together may be directly welded to the positive electrode pole to form an electrical connection; alternatively, the cell assembly may further include a positive electrode adapter piece, where the multiple positive electrode tabs stacked together are welded to one end of the positive electrode adapter piece, and the other end of the positive electrode adapter piece is welded to the positive electrode pole, enabling the positive electrode tabs to form an electrical connection with the positive electrode pole.

The negative electrode plate generally includes a negative electrode current collector and a negative electrode active material layer, where the negative electrode active material layer is directly or indirectly coated on the negative electrode current collector, the negative electrode current collector not coated with the negative electrode active material layer protrudes from the negative electrode current collector coated with the negative electrode active material layer, and the negative electrode current collector not coated with the negative electrode active material layer serves as a negative electrode tab; multiple negative electrode tabs are stacked together and electrically connected to the negative electrode pole. As an example, the multiple negative electrode tabs stacked together may be directly welded to the negative electrode pole to form an electrical connection; alternatively, the cell assembly may further include a negative electrode adapter piece, where the multiple negative electrode tabs stacked together are welded to one end of the negative electrode adapter piece, and the other end of the negative electrode adapter piece is welded to the negative electrode pole, enabling the negative electrode tabs to form an electrical connection with the negative electrode pole. The material of the separator is not limited and may be, for example, polypropylene or polyethylene, or the like.

The pressure relief structure on the battery cell mentioned in this application is configured to release internal gas from the battery cell when the internal pressure of the battery cell becomes excessive (for example, due to overcharging or other reasons), reducing the internal pressure of the battery cell and preventing rapid pressurization inside the battery cell from causing combustion or explosion. For example, the pressure relief structure may be an explosion-proof valve, an explosion-proof disc, or the like.

In recent years, new energy vehicles have experienced rapid development. In the field of electric vehicles, a battery serves as the power source of an electric vehicle, playing an irreplaceable and important role. As a core component of new energy vehicles, the battery has high requirements in terms of both energy density and reliability.

In related technologies, a battery includes multiple battery cells. When a thermal runaway occurs in a certain battery cell, the heat from that battery cell transfers significantly to the remaining individual battery cells, leading to rapid thermal diffusion.

Based on the above considerations, to suppress thermal diffusion in a battery, a battery is proposed, where the battery includes at least two first battery cells, each first battery cell being provided with multiple sidewalls, where the multiple sidewalls include a first sidewall, the first sidewall being the sidewall with the largest area of the first battery cell, and the first sidewalls of at least two first battery cells being arranged opposite each other in a first direction and offset from each other in a second direction, the first direction and the second direction being perpendicularly arranged, and the first direction being perpendicular to the first sidewall.

In the above technical solution, at least two first battery cells are arranged offset from each other, which is conducive to fully utilizing the arrangement space of the battery and enhances the adaptability of multiple first battery cells to arrangement spaces of different shapes; meanwhile, the offset arrangement of two first battery cells reduces the heat transfer from any one first battery cell toward another opposite first battery cell, so that when a thermal runaway occurs in a certain first battery cell, the heat transferred from the thermally runaway first battery cell to an adjacent first battery cell is reduced, lowering the probability of thermal runaway in the adjacent first battery cell, achieving the purpose of suppressing thermal diffusion and enhancing the reliability of use of the battery.

An embodiment of this application provides an electric apparatus using the battery of this disclosure as a power source, where the electric apparatus may include, but is not limited to, a mobile phone, a tablet, a laptop, an electric toy, an electric tool, an electric bicycle, an electric vehicle, a ship, a spacecraft, or the like. The electric toy may include fixed or mobile electric toys, such as a game console, an electric car toy, an electric ship toy, an electric airplane toy, or the like, and the spacecraft may include an airplane, a rocket, a space shuttle, a spaceship, or the like.

For convenience of explanation, the following embodiments take the electric apparatus 1000 as a vehicle as an example to provide a detailed introduction to the structure of the electric apparatus 1000, the battery 200, and the battery cells (for example, the first battery cell 10 and the second battery cell 61 described below).

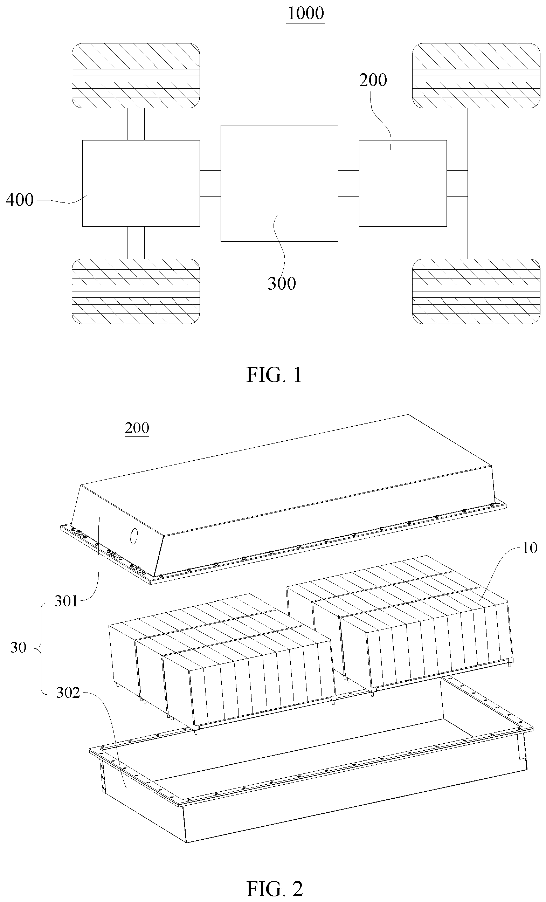

Referring to FIG. 1, FIG. 1 is a schematic structural diagram of the electric apparatus 1000 as a vehicle according to some embodiments of this application. The vehicle may be a fuel vehicle, a gas vehicle, or a new energy vehicle, where the new energy vehicle may be a pure electric vehicle, a hybrid electric vehicle, or an extended-range vehicle, or the like. The vehicle is provided with a battery 200, where the battery 200 may be disposed at the bottom, front, or rear of the vehicle. The battery 200 may be used for powering the vehicle; for example, the battery 200 may serve as an operational power source for the vehicle. The vehicle may further include a controller 300 and a motor 400, where the controller 300 is configured to control the battery 200 to supply power to the motor 400, such as for the operational power needs during starting, navigation, and driving of the vehicle. In some embodiments of this application, the battery 200 may not only serve as an operational power source for the vehicle but also as a driving power source for the vehicle, replacing or partially replacing fuel or natural gas to provide driving power for the vehicle.

Referring to FIG. 2, FIG. 2 is an exploded structural diagram of a battery 200 using battery cells (for example, multiple battery cells including multiple first battery cells 10 without including a second battery cell 61, or multiple battery cells including multiple first battery cells 10 and at least one second battery cell 61) according to some embodiments of this application. The battery 200 includes a box 30 and multiple battery cells, where the battery cells are accommodated within the box 30. The box 30 is configured to provide an assembly space for the battery cells, and the box 30 may adopt various structures. In some embodiments, the box 30 may include a first box portion 301 and a second box portion 302, where the first box portion 301 and the second box portion 302 cover each other, and the first box portion 301 and the second box portion 302 together define an accommodation cavity for accommodating the battery cells. The second box portion 302 may be a hollow structure with one end open, and the first box portion 301 may be a plate-like structure, where the first box portion 301 covers the open side of the second box portion 302, so that the first box portion 301 and the second box portion 302 together define the accommodation cavity; alternatively, the first box portion 301 and the second box portion 302 may both be hollow structures with one side open (for example, as shown in FIG. 2), where the open side of the first box portion 301 covers the open side of the second box portion 302. Of course, the box 30 formed by the first box portion 301 and the second box portion 302 may be of various shapes, such as a cylinder or a cuboid, or the like.

In the battery 200, multiple battery cells may be connected in series, parallel, or series-parallel, and then an entirety of the plurality of battery cells is accommodated in the box 30. Alternatively, the battery 200 may be formed by a plurality of battery cells being connected in series, parallel, or series-parallel first to form a battery module and then a plurality of battery modules being connected in series, parallel, or series-parallel to form an entirety which is accommodated in the box 30. The battery 200 may further include other structures. For example, the battery 200 may further include a busbar configured to achieve electrical connection between multiple battery cells.

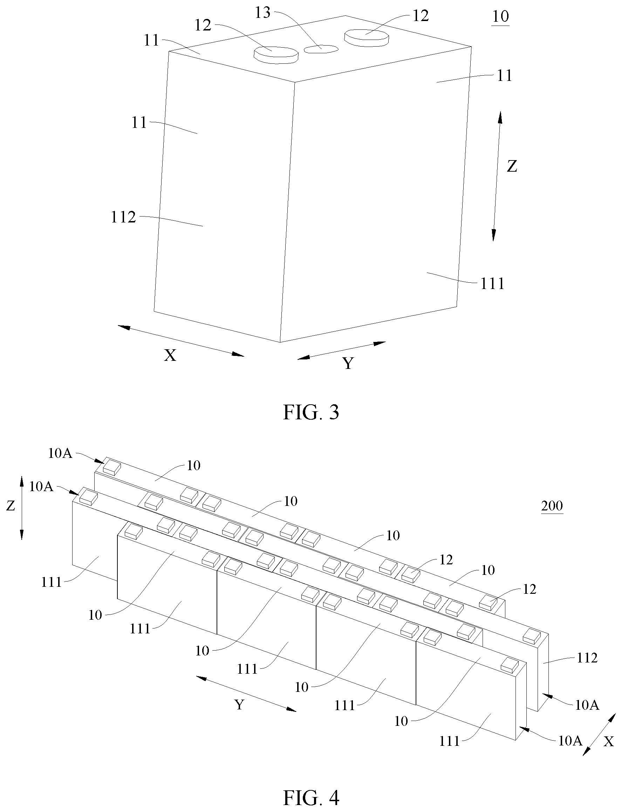

Referring to FIG. 3, FIG. 3 is a schematic structural diagram of a battery cell (for example, the first battery cell 10 and the second battery cell 61 described below) according to some embodiments of this application. The battery cell is in the shape of a cuboid, where a height direction of the battery cell is a third direction Z, a length direction of the battery cell is a second direction Y, and a thickness direction of the battery cell is a first direction X. The first direction X, the second direction Y, and the third direction Z are mutually perpendicular in pairs. However, this is not limited thereto; in other embodiments of this application, the battery cell may also be in the shape of a polyhedral prism, a flat body, or other shapes, or the like.

Referring to FIG. 3 to FIG. 5, in an embodiment of this application, the battery 200 includes at least two first battery cells 10, each first battery cell 10 being provided with multiple sidewalls 11, where the multiple sidewalls 11 include a first sidewall 111, the first sidewall 111 is a sidewall 11 with the largest area of the first battery cell 10, thus the first sidewall 111 is the "large face" of the first battery cell 10. The number of first sidewalls 111 that the first battery cell 10 has may be one or more, and the number of first sidewalls 111 that multiple first battery cells 10 have may be equal or unequal.

The first sidewalls 111 of at least two first battery cells 10 are arranged opposite each other in the first direction X, and the first sidewalls 111 of the at least two first battery cells 10 are arranged offset from each other in the second direction Y, facilitating that a portion of an orthographic projection in the first direction X of each of the two first sidewalls 111 opposite each other in the first direction X is located outside an outer contour in the second direction Y of the orthographic projection in the first direction X of the other, while another portion may overlap with the orthographic projection in the first direction X of the other. Thus, the two first battery cells 10 corresponding to the two first sidewalls 111 opposite each other are arranged offset from each other in the second direction Y, and any two adjacent first battery cells 10 among the at least two first battery cells 10 are arranged offset from each other in the second direction Y. In this case, two non-adjacent first battery cells 10 among the at least two first battery cells 10 may also be arranged offset from each other in the second direction Y, or two non-adjacent first battery cells 10 among the at least two first battery cells 10 may also be directly aligned in the second direction Y. The first direction X and the second direction Y are perpendicularly arranged, and the first direction X is perpendicular to the first sidewall 111.

It can be understood that two first battery cells 10 being adjacent in the first direction X means that no other first battery cell 10 is disposed between the two first battery cells 10 in the first direction X; and two first battery cells 10 being non-adjacent in the first direction X means that at least one other first battery cell 10 is disposed between the two first battery cells 10 in the first direction X.

For example, if the number of first battery cells 10 in the battery 200 is m, where m is a positive integer and m ≥ 2, among the m first battery cells 10, there exist n first battery cells 10 whose first sidewalls 111 are arranged opposite each other in the first direction X and arranged offset from each other in the second direction Y. In other words, if n first battery cells 10 are arranged offset from each other, any two adjacent first battery cells 10 among the n first battery cells 10 are arranged offset from each other, where n is a positive integer and 2 ≤ n ≤ m. For two adjacent first battery cells 10 offset from each other, a portion of an orthographic projection in the first direction X of the first sidewall 111 of one first battery cell 10 is located on one side in the second direction Y of an outer contour of an orthographic projection in the first direction X of the first sidewall 111 of another first battery cell 10, while another portion is located within the outer contour of the orthographic projection in the first direction X of the first sidewall 111 of the other first battery cell 10. Furthermore, a portion of an orthographic projection in the first direction X of the first sidewall 111 of the other first battery cell 10 is located on one side in the second direction Y of an outer contour of an orthographic projection in the first direction X of the first sidewall 111 of the one first battery cell 10, while another portion is located within the outer contour of the orthographic projection in the first direction X of the first sidewall 111 of the one first battery cell 10. In this case, the orthographic projections in the first direction X of the two first sidewalls 111 offset from each other partially overlap each other.

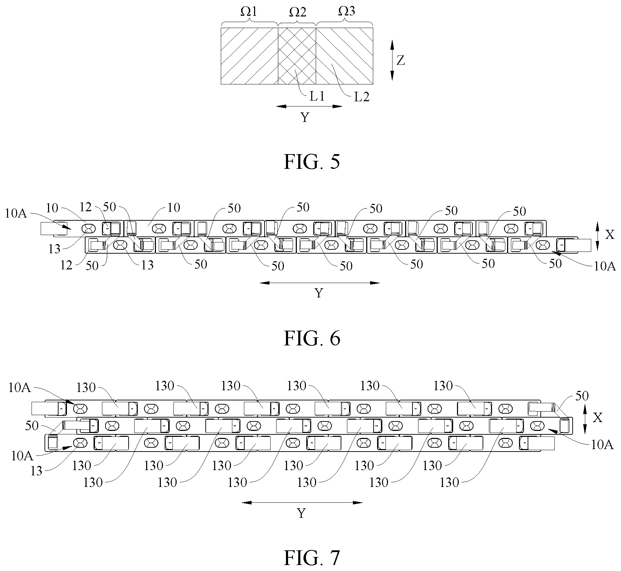

As an example, referring to FIG. 5, a region formed by a combination of a first region Ω1 and a second region Ω2 is an orthographic projection in the first direction X of the first sidewall 111 of one first battery cell 10, and a region formed by a combination of the second region Ω2 and a third region Ω3 is an orthographic projection in the first direction X of the first sidewall 111 of another first battery cell 10, where the second region Ω2 is an overlapping region of the orthographic projections in the first direction X of the first sidewalls 111 of the two first battery cells 10 offset from each other. It can be seen that, for the one first battery cell 10, the first region Ω1 is located outside an outer contour of the orthographic projection in the first direction X of the first sidewall 111 of the other first battery cell 10, and the second region Ω2 is located within the outer contour of the orthographic projection in the first direction X of the first sidewall 111 of the other first battery cell 10, while for the other first battery cell 10, the third region Ω3 is located outside an outer contour of the orthographic projection in the first direction X of the first sidewall 111 of the one first battery cell 10, and the second region Ω2 is located within the outer contour of the orthographic projection in the first direction X of the first sidewall 111 of the one first battery cell 10.

It can be seen that the offset arrangement of at least two first battery cells 10 facilitates full utilization of the arrangement space of the battery 200; meanwhile, the offset arrangement of the first battery cells 10 can also adapt to irregular arrangement spaces and, to some extent, adjust the offset distance of the first battery cells 10 according to the shape of the arrangement space, enhancing the adaptability of the battery cells to the arrangement space.

Moreover, when there is heat exchange between two first battery cells 10 offset from each other, the "large faces" of the two first battery cells 10 are arranged from each other in the second direction Y, which is conducive to reducing the heat exchange area between the two first battery cells 10, thereby facilitating a reduction in the heat transfer amount and peak heat transfer power between the two first battery cells 10 offset from each other. When a thermal runaway occurs in a certain first battery cell 10, this prevents the first battery cell 10 from transferring heat primarily to one first battery cell 10, and the heat from the thermally runaway first battery cell 10 is dispersedly transferred, reducing the heat transferred from the thermally runaway first battery cell 10 to each of the remaining first battery cells 10, thereby achieving the purpose of suppressing thermal diffusion. This is conducive to enhancing the reliability of use of the battery 200 use while improving temperature rise during use, such as during fast charging.

As an example, among multiple first battery cells 10 in the battery 200, at least one first battery cell 10 is arranged offset from two first battery cells 10. In this case, the heat generated by the first battery cell 10 can be dispersedly transferred to the two first battery cells 10, effectively reducing the peak heat transfer power and the heat transfer amount between the two first battery cells 10, thereby controlling thermal diffusion and enhancing the reliability of use of the battery 200.

For example, in the example of FIG. 4, the first battery cell 10 is in the shape of a cuboid, and the first battery cell 10 has two first sidewalls 111 opposite each other in the first direction X, where at least one first sidewall 111 of the first battery cell 10 is arranged opposite each other in the first direction X and offset from each other in the second direction Y from a first sidewall 111 of another first battery cell 10. Of course, the shape of the first battery cell 10 is not limited thereto.

In the above technical solution, at least two first battery cells 10 are arranged offset from each other, which is conducive to fully utilizing the arrangement space of the battery 200 and enhancing the adaptability of multiple first battery cells 10 to arrangement spaces of different shapes; in addition, the offset arrangement of two first battery cells 10 reduces the heat transfer from any one first battery cell 10 toward another opposite first battery cell 10, so that when a thermal runaway occurs in a first battery cell 10, the heat transferred from the thermally runaway first battery cell 10 to an adjacent first battery cell 10 is reduced, lowering the probability of thermal runaway in the adjacent first battery cell 10, thereby achieving the purpose of suppressing thermal diffusion and enhancing the reliability of use of the battery 200. Furthermore, this arrangement eliminates the need for additional structures in the battery 200, simplifying the structure of the battery 200.

Referring to FIG. 4, in some embodiments of this application, at least two first sidewalls 111 offset from each other are thermally conductively connected, meaning that the two first battery cells 10 corresponding to the two first sidewalls 111 offset from each other exchange heat through the corresponding two first sidewalls 111, allowing each of the two first battery cells 10 offset from each other to transfer heat to the other through the thermally conductively connected portions of the corresponding two first sidewalls 111.

In the above technical solution, at least two first sidewalls 111 offset from each other are thermally conductively connected, which is conducive to appropriately increasing the heat transfer efficiency between the two first battery cells 10 offset from each other to allow the internal heat of the battery 200 to be dissipated more quickly. This is conducive to the thermal management control of the battery 200.

It should be noted that in the embodiments of this application, "thermally conductively connected" can be understood as the existence of heat exchange between two components, including direct heat exchange between the two components (where the heat of one component is directly transferred to the other component, with the two components in contact) or indirect heat exchange between the two components (where the heat of one component is transferred to the other component through other structures such as thermally conductive adhesive or thermally conductive members). Furthermore, "thermally conductively connected" may mean that heat is transferred from either one of the two components to the other. In other words, for one component, the component can transfer heat to the another component, or the another component can transfer heat to the component.

As an example, two first sidewalls 111 being thermally conductively connected may include one first battery cell 10 transferring heat to another first battery cell 10 through the first sidewall 111, and the another first battery cell 10 transferring heat to the one first battery cell 10 through the first sidewall 111.

In some embodiments of this application, a thermally conductive adhesive layer is provided between at least two first sidewalls 111 offset from each other.

In the above technical solution, a thermally conductive adhesive layer is provided between at least two first sidewalls 111 offset from each other, which is conducive to further appropriately increasing the heat conduction rate between the first battery cells 10 offset from each other, facilitating appropriate heat dissipation during the operation of the first battery cells 10 and achieving thermal management of the battery 200.

Referring to FIG. 5, in some embodiments of this application, in the second direction Y, an overlapping area of an overlapping portion between two first battery cells 10 offset from each other is denoted as L1, an area of the first sidewall 111 is denoted as L2, and a ratio of L1/L2 ranges from 2/9 to 7/9.

For example, referring to FIG. 5, taking two first battery cells 10 offset from each other as a 1st first battery cell 10 and a 2nd first battery cell 10 as an example, a second region Ω2 is an overlapping region of orthographic projections of the two first sidewalls 111 of the two opposite first battery cells 10 in the first direction X, where an area of the second region Ω2 is denoted as L1. A region formed by a combination of a first region Ω1 and the second region Ω2 is an orthographic projection of the first sidewall 111 of the 1st first battery cell 10 in the first direction X, and a region formed by a combination of the second region Ω2 and a third region Ω3 is an orthographic projection of the first sidewall 111 of the 2nd first battery cell 10 in the first direction X, where a sum of the areas of the first region Ω1 and the second region Ω2 is an area L2' of the first sidewall 111 of the 1st first battery cell 10, and a sum of the areas of the second region Ω2 and the third region Ω3 is an area L2" of the first sidewall 111 of the 2nd first battery cell 10; and L2' and L2" may be equal or unequal, and L2 may be either L2' or L2", with a ratio of L1/L2' and L1/L2" ranging from 2/9 to 7/9. The shapes of the first region Ω1, the second region Ω2, and the third region Ω3 are not specifically limited. As an example, the first battery cell 10 is in the shape of a cuboid, and the first region Ω1, the second region Ω2, and the third region Ω3 are all rectangular regions.

In the above technical solution, the ratio L1/L2 of the overlapping area of the overlapping portion between two first battery cells 10 offset from each other to the area of the first sidewall 111 is set to be within the range of 2/9 to 7/9, which allows the two first battery cells 10 offset from each other to have an appropriate facing region in the first direction X, so that each of the two first battery cells 10 offset from each other to transfer appropriate heat to different positions and components, thereby balancing temperature control and thermal management of the first battery cells 10 under the premise of controlling thermal diffusion. This is conducive to enhancing the performance of the battery 200. Furthermore, the flexible setting of the overlapping area size facilitates further adaptation of the battery 200 to its arrangement space.

As an example, a ratio of L1 to L2 may be 2/9, 1/3, 1/2, 5/9, 2/3, 7/9, or the like.

For example, in the example of FIG. 5, the two first sidewalls 111 offset from each other are thermally conductively connected, and L1/L2 falls within the range of 2/9 to 7/9, where the heat from each of the two first battery cells 10 offset from each other can be transferred to the other first battery cell 10 and other positions (for example, other first battery cells 10), facilitating simultaneous suppression of internal thermal diffusion in the battery 200 and thermal management of the battery 200.

In some embodiments of this application, a ratio of L1 to L2 ranges from 5/13 to 8/13.

In the above technical solution, setting the ratio of the overlapping area of the overlapping portion between two first battery cells 10 offset from each other to the area of the first sidewall 111, L1/L2, within the range of 5/13 to 8/13 further balances the suppression of thermal diffusion in the battery 200 and the thermal management of the battery 200, enhancing the performance of the battery 200.

As an example, a ratio of L1 to L2 may be 5/13, 6/13, 7.5/13, or 8/13, or the like.

Referring to FIG. 4, FIG. 6, and FIG. 7, in some embodiments of this application, the battery 200 includes multiple rows of battery units 10A, each row of battery units 10A includes multiple first battery cells 10, multiple rows of battery units 10A are sequentially arranged in the first direction X, and the first sidewalls 111 opposite each other in the first direction X in at least two adjacent rows of battery units 10A are arranged offset from each other, making the at least two adjacent rows of battery units 10A offset from each other.

It can be seen that if the battery units 10A are arranged in m' rows, where m' is a positive integer and m' ≥ 2, and there exist n' adjacent rows of battery units 10A of which the first sidewalls 111 opposite each other in the first direction X are arranged offset from each other, with 2 ≤ n' ≤ m', first sidewalls 111 of any two adjacent rows of battery units 10A among the n' rows of battery units 10A, opposite each other in the first direction X, are arranged offset from each other. In other words, in two rows of battery units 10A adjacent and offset from each other in the first direction X, at least one first sidewall 111 in each row of battery units 10A is arranged offset in the second direction Y from at least one first sidewall 111 in the other row, so that at least one first battery cell 10 in each row of battery units 10A is arranged offset in the second direction Y from at least one first battery cell 10 in the other row. In this case, any two adjacent rows of battery units 10A among the n' rows of battery units 10A are arranged offset from each other.

As an example, there are three rows of battery units 10A, where the first sidewalls 111 opposite each other in the first direction X in two adjacent rows of battery units 10A are arranged offset from each other, while the first sidewalls 111 of the remaining row of battery units 10A, opposite in the first direction X to either of the two adjacent rows of battery units 10A, are not arranged offset from each other. Alternatively, first sidewalls 111 of any two adjacent rows of battery units 10A among the three rows of battery units 10A, opposite each other in the first direction X, are arranged offset from each other. Of course, the battery units 10A may also consist of four rows or more.

In the above technical solution, the first sidewalls 111 opposite each other in at least two adjacent rows of battery units 10A in the first direction X are arranged offset from each other, which reduces the probability of a thermally runaway battery unit causing thermal runaway in an adjacent row of battery units, thereby further controlling thermal diffusion between adjacent rows of battery units 10A.

As an example, in the examples of FIG. 4, FIG. 6, and FIG. 7, multiple first battery cells 10 in each row of battery units 10A are sequentially arranged in the second direction Y; and in adjacent rows of battery units 10A, multiple first battery cells 10 in each row of battery units 10A have first sidewalls 111 on the same side. Each of the multiple first sidewalls 111 on the same side is arranged offset in the second direction Y from each of the multiple first sidewalls 111 opposite each other in another row of battery units 10A, so that each first battery cell 10 in each row of battery units 10A is arranged offset from a corresponding one or two first battery cells 10 in another row of battery units 10A in the second direction Y; that is, the number of first battery cells 10 in each row of battery units 10A offset from corresponding first battery cells 10 in another row of battery units 10A equals the number of first battery cells 10 in that row of battery units 10A, which is conducive to maximizing the control of thermal diffusion and thermal management between adjacent rows of battery units 10A. In this case, multiple first battery cells 10 of the battery 200 may be arranged in a brick-like structure. Further, due to the above arrangement of multiple first battery cells 10, the number of first battery cells 10 arranged in the first direction of the battery 200 is reduced, making the deformation of the entire battery 200 in the first direction due to the expansion of the first battery cells 10 smaller, and rendering the deformation of the battery 200 controllable. This is conducive to enhancing the safety factor of the battery 200, improving the expansion force of the first battery cells 10, and mitigating the squeezing force between two adjacent first battery cells 10 in the first direction.

For example, multiple first battery cells 10 in each row of battery units 10A are sequentially arranged in the second direction Y, and the number of battery units 10A in the battery 200 is less than the number of first battery cells 10 in a battery unit 10A, making the deformation of the battery 200 in the first direction controllable.

Of course, the arrangement of multiple first battery cells 10 in each row of battery units 10A is not limited thereto; a battery unit 10A may also be configured such that the number of first battery cells 10 in the battery unit 10A offset from corresponding first battery cells 10 in another row of battery units 10A is less than the number of first battery cells 10 in the battery unit 10A. For example, a battery unit 10A may also be configured such that each of a portion of the first battery cells 10 in the battery unit 10A is arranged offset from a corresponding first battery cell 10 in an adjacent row of battery units 10A, while each of another portion of the first battery cells 10 in the battery unit 10A is not offset from a corresponding first battery cell 10 in an adjacent row of battery units 10A.

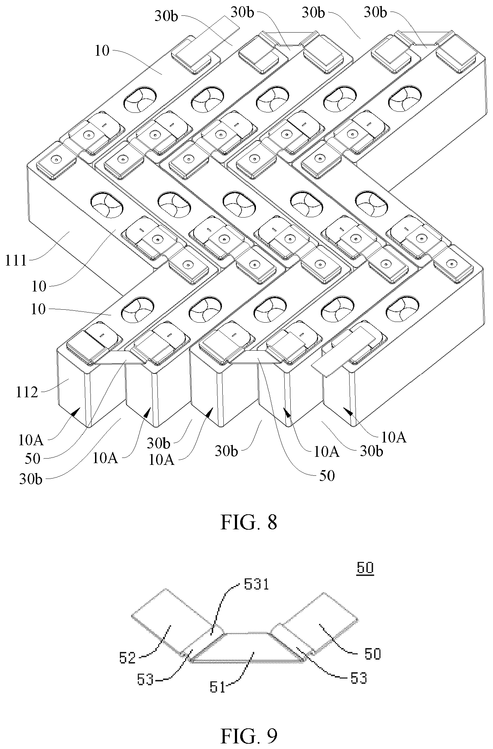

As an example, in the examples of FIG. 3 and FIG. 8, a battery unit 10A includes multiple first battery cells 10. A first battery cell 10 includes a first sidewall 111 and a second sidewall 112 that form an angle. The first sidewalls 111 opposite each other in the first direction X in at least two adjacent rows of battery units 10A are arranged offset from each other; and a portion of the first sidewall 111 of at least a portion of the first battery cells 10 is directly aligned with a portion of the first sidewall 111 of an adjacent row, and another portion of the first sidewall 111 of the at least a portion of the first battery cells 10 is directly aligned with the second sidewall 112 of an adjacent row. In this case, the dispersed heat transfer of the first battery cell 10 can also be achieved, thereby suppressing thermal diffusion. Further, any two adjacent first battery cells 10 in the same row of battery units 10A intersect to define an open space, where two intersecting first battery cells 10 from another row of battery units 10A are disposed within the open space; the arrangement form of multiple first battery cells 10 in adjacent rows of battery units 10A is consistent, facilitating the sequential arrangement of multiple rows of battery units 10A in the first direction. For example, the second sidewall 112 of one of any two adjacent first battery cells 10 in a battery unit 10A is parallel to and directly aligned with the first sidewall 111 of the other first battery cell, and the second side wall 121 and the first side wall 111 are thermally conductively connected.

As an example, the first sidewalls 111 of two intersecting first battery cells 10 are perpendicularly arranged. For example, taking a battery unit 10A including three first battery cells 10 as an example, where the first battery cell 10 includes two first sidewalls 111 opposite each other in the first direction and two second sidewalls opposite each other in the second direction, with the second direction being the left-right direction, for a single row of battery units 10A, in the left-right direction, a portion of the first sidewall 111 of the middle first battery cell 10 is directly aligned with and thermally conductively connected to a portion of the first sidewall 111 of a first battery cell 10 in an adjacent row, another portion of the first sidewall 111 of the middle first battery cell 10 is directly aligned with and thermally conductively connected to the second sidewall 112 of the left first battery cell 10, and the right second sidewall 112 of the middle first battery cell 10 is directly aligned with and thermally conductively connected to a portion of the first sidewall 111 of the right first battery cell 10. In this case, the three first battery cells 10 of the battery unit 10A are roughly arranged in a Z-shape.

In other embodiments of this application, at least one row among multiple rows of battery units 10A includes multiple first battery cells 10, and at least one row among the remaining battery units 10A includes one first battery cell 10.

Referring to FIG. 4, FIG. 6, and FIG. 8, in some embodiments of this application, each first battery cell 10 includes a second sidewall 112 connected to the first sidewall 111, where there may be multiple the second sidewall 112, and each first battery cell 10 is thermally conductively connected to an adjacent first battery cell 10 through at least one first sidewall 111 and at least one second sidewall 112.

In the above technical solution, each first battery cell 10 is thermally conductively connected to an adjacent first battery cell 10 through at least one first sidewall 111 and at least one second sidewall 112, so that each first battery cell 10 can transfer heat to adjacent first battery cell 10 through at least one first sidewall 111 and at least one second sidewall 112, facilitating heat transfer from each first battery cell 10 to different first battery cells 10 via the first sidewall 111 and the second sidewall 112. For example, each first battery cell 10 can transfer heat to at least two adjacent first battery cells 10 through the first sidewall 111 and the second sidewall 112 to achieve dispersed heat transfer for each first battery cell 10, further effectively reducing the peak heat transfer power between first battery cells 10, which is conducive to enhancing the suppression of thermal diffusion.

It can be understood that each first battery cell 10 is thermally conductively connected to an adjacent first battery cell 10 through at least one first sidewall 111. For one first sidewall 111 of a first battery cell 10 used for thermal conductive connection, at least one first battery cell 10 is thermally conductively connected to one adjacent first battery cell 10 through the corresponding one first sidewall 111, and/or at least one first battery cell 10 is thermally conductively connected to multiple adjacent first battery cells 10 through the corresponding one first sidewall 111. Thus, when a first battery cell 10 is thermally conductively connected to an adjacent first battery cell 10 through multiple first sidewalls 111, taking a first battery cell 10 as an example, which is thermally conductively connected to an adjacent first battery cell 10 through two first sidewalls 111, each first sidewall 111 is thermally conductively connected to one or more adjacent first battery cells 10.

As an example, at least one first battery cell 10 is thermally conductively connected to two adjacent first battery cells 10 through a single first sidewall 111; and in this case, the two thermally conductively connected sidewalls 111 may both be first sidewalls 111, or they may be a first sidewall 111 and a second sidewall 112, or the like.

Similarly, each first battery cell 10 is thermally conductively connected to an adjacent first battery cell 10 through at least one second sidewall 112. For one second sidewall 112 of a first battery cell 10 used for thermal conductive connection, at least one first battery cell 10 is thermally conductively connected to one adjacent first battery cell 10 through the corresponding one second sidewall 112, and/or at least one first battery cell 10 is thermally conductively connected to multiple adjacent first battery cells 10 through the corresponding one second sidewall 112. Thus, when a first battery cell 10 is thermally conductively connected to an adjacent first battery cell 10 through multiple second sidewalls 112, taking a first battery cell 10 as an example, which is thermally conductively connected to an adjacent first battery cell 10 through two second sidewalls 112, each second sidewall 112 is thermally conductively connected to one or more adjacent first battery cells 10.

As an example, at least one first battery cell 10 is thermally conductively connected to a first sidewall 111 or a second sidewall 112 of an adjacent first battery cell 10 through a single second sidewall 112.

For example, taking the first battery cell 10 as a cuboid and multiple first battery cells 10 in a battery unit 10A being sequentially arranged in the second direction Y as an example, the first battery cell 10 includes two first sidewalls 111 opposite each other in the first direction X and two second sidewalls 112 opposite each other in the second direction Y, where each second sidewall 112 is perpendicularly connected to the first sidewall 111. Each of the two outermost first battery cells 10 in the battery unit 10A in the second direction Y is thermally conductively connected to one adjacent first battery cell 10 through one second sidewall 112, and each of the remaining first battery cells 10 in the battery unit 10A, except the two outermost ones in the second direction Y, is thermally conductively connected to two adjacent first battery cells 10 through two second sidewalls 112 respectively. In the example of the figure, for battery units 10A offset from each other in three or more rows, in the two outermost battery units 10A in the first direction X, each first battery cell 10 in each battery unit 10A is thermally conductively connected to one or two adjacent first battery cells 10 through one first sidewall 111, and in the remaining battery units 10A except the two outermost ones in the first direction X, each first battery cell 10 is thermally conductively connected to corresponding first battery cells 10 in two adjacent rows of battery units 10A through two first sidewalls 111 respectively. Of course, the angle between the second sidewall 112 and the first sidewall 111 is not limited to a right angle.

For another example, each row of battery units 10A includes three or more first battery cells 10, where a first battery cell 10 includes a first sidewall 111 and a second sidewall 112 that form an angle, and the first sidewalls 111 opposite each other in the first direction X in at least two adjacent rows of battery units 10A are arranged offset from each other. Furthermore, a portion of the first sidewall 111 of at least a portion of the first battery cells 10 is directly aligned with a portion of the first sidewall 111 of an adjacent row, and another portion of the first sidewall 111 of the at least a portion of the first battery cells 10 is directly aligned with the second sidewall 112 of an adjacent row; and in this case, at least a portion of the first battery cells 10 can be thermally conductively connected to two first battery cells 10 in an adjacent row through the first sidewall 111 and thermally conductively connected to an adjacent first battery cell 10 in the same row through the second sidewall 112, facilitating the dispersed transfer of heat from a thermally runaway first battery cell 10 to at least three adjacent first battery cells 10.

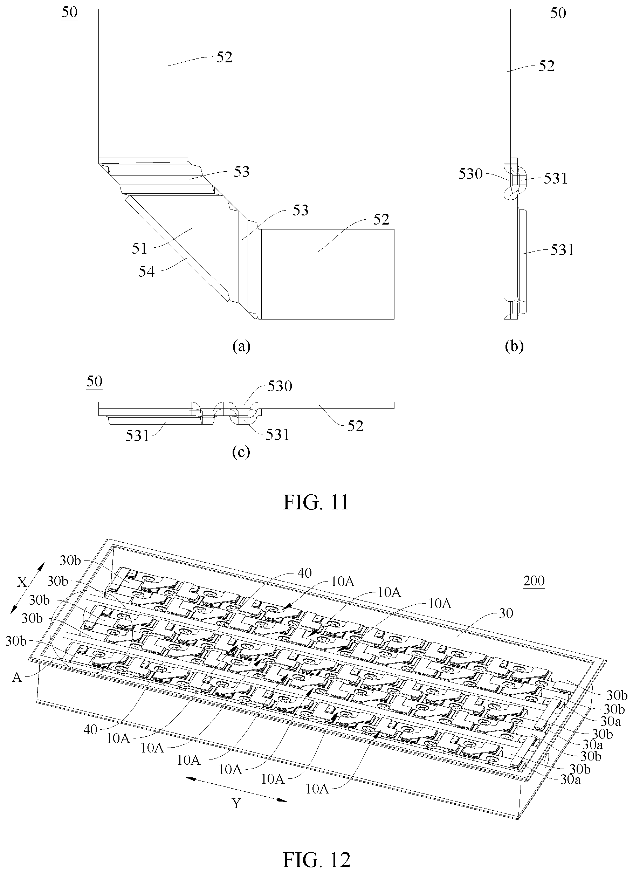

Referring to FIG. 12, FIG. 15 to FIG. 17, and FIG. 20, in some embodiments of this application, the battery 200 further includes a box 30, where multiple rows of battery units 10A are disposed within the box 30, multiple first battery cells 10 in each row of battery units 10A are sequentially arranged in the second direction Y, and the second direction Y is parallel to a length direction of the box 30.

In the above technical solution, multiple first battery cells 10 in each row of battery units 10A are arranged sequentially in the second direction Y, with the second direction Y parallel to the length direction of the box 30, which facilitates the box 30 providing a suitable arrangement space for the battery units 10A, simplifying the setup of the battery units 10A.

For example, in the example of FIG. 12, a length of a battery unit 10A in the second direction Y is greater than a width of the battery unit 10A in the first direction X, where the second direction Y is parallel to the length direction of the box 30, and the first direction X is parallel to a width direction of the box 30. This is conducive to enabling the arrangement of multiple first battery cells 10 in the battery unit 10A and the arrangement of multiple battery units 10A to achieve a good match with the length and width of the box 30, respectively, so as to facilitate the box 30 to provide sufficient arrangement space. Of course, in other examples, the first direction X may also be parallel to a height direction of the box 30.

Referring to FIG. 12, FIG. 15 to FIG. 17, and FIG. 20, in some embodiments of this application, partition plates 40 are provided within the box 30 to define multiple accommodation chambers 30a, where each accommodation chamber 30a contains at least two rows of battery units 10A offset from each other. It can be understood that the number of battery units 10A disposed in each of the multiple accommodation chambers 30a may be equal or unequal; and the number of partition plates 40 may be one or more.

In the above technical solution, partition plates 40 are provided within the box 30 to define multiple accommodation chambers 30a, with each accommodation chamber 30a containing at least two rows of battery units 10A offset from each other, which facilitates grouped assembly of multiple first battery cells 10 of the battery 200, improving the assembly convenience of the battery 200, while the partition plates 40 play the role of structural reinforcement to the box 30, enhancing the reliability of use of the box 30.

For example, in the examples of FIG. 12, FIG. 15 to FIG. 17, and FIG. 20, there are multiple partition plates 40, where multiple partition plates 40 are spaced apart in the first direction X to define multiple accommodation chambers 30a sequentially arranged in the first direction X, each accommodation chamber 30a is provided with multiple rows of battery units 10A, and any two adjacent rows of battery units 10A within each accommodation chamber 30a are arranged offset from each other.

Of course, in other embodiments of this application, no partition plate 40 may be provided within the box 30, and in this case, there may be one accommodation chamber 30a.

Referring to FIG. 12, FIG. 15 to FIG. 17, and FIG. 20, in some embodiments of this application, the partition plate 40 is thermally conductively connected to an adjacent battery unit 10A, meaning there is heat exchange between the partition plate 40 and the adjacent battery unit 10A, and the partition plate 40 is thermally conductively connected to the box 30, allowing heat from the battery unit 10A to be transferred to the box 30 through the partition plate 40.

It can be understood that for a single partition plate 40, one row or multiple rows of the battery units 10A may be thermally conductively connected to the partition plate 40.

In the above technical solution, the partition plates 40 are thermally conductively connected to adjacent battery units 10A and to the box 30, so that for the outermost battery unit 10A in the first direction X, its heat can be transferred not only to an adjacent row of battery units 10A but also to the partition plate 40 and subsequently to the box 30, further achieving dispersed heat transfer of the battery unit 10A and enhancing the thermal management effect of the battery 200.

It can be understood that the position of the thermal conductive connection between the partition plate 40 and the box 30 is not specifically limited in this application. For example, at least one side surface of the partition plate 40 in the third direction Z is thermally conductively connected to a corresponding wall of the box 30, and/or at least one side surface of the partition plate 40 in the second direction Y is thermally conductively connected to a corresponding wall of the box 30, where the third direction Z is perpendicular to the first direction X and the second direction Y, respectively.

It can be understood that the partition plate 40 being thermally conductively connected to an adjacent battery unit 10A may mean that the partition plate 40 is thermally conductively connected to at least one first battery cell 10 in the adjacent battery unit 10A. Further, the partition plate 40 is thermally conductively connected to each first battery cell 10 in the adjacent battery unit 10A, facilitating that the heat from each first battery cell 10 in the battery unit 10A adjacent to the partition plate 40 can be transferred not only to the first battery cells 10 in an adjacent row of battery units 10A but also to the partition plate 40 and subsequently to the box 30, further achieving dispersed heat transfer of each first battery cell 10 in the battery unit 10A adjacent to the partition plate 40 and further enhancing the thermal management effect of the battery 200.

In some examples, a first thermally conductive adhesive is provided between the partition plate 40 and the adjacent battery unit 10A, and a second thermally conductive adhesive is provided between the partition plate 40 and the box 30.

Referring to FIG. 4 to FIG. 8, FIG. 12, FIG. 14 to FIG. 17, and FIG. 20, in some embodiments of this application, the first sidewalls 111 opposite each other in any two adjacent rows of battery units 10A are arranged offset from each other, meaning any two adjacent rows of battery units 10A are arranged offset from each other, where two adjacent rows of battery units 10A can be understood as being adjacent in the first direction X with no other battery unit 10A disposed between the two rows of battery units 10A in the first direction X.

In the above technical solution, the first sidewalls 111 opposite each other in any two adjacent rows of battery units 10A are arranged offset from each other, which facilitates direct and/or indirect dispersed transfer of heat generated by each first battery cell 10 to more adjacent first battery cells 10, further enhancing the thermal management effect of the battery 200.

In some examples, the battery 200 includes multiple rows of battery units 10A sequentially arranged in the first direction X, each row of battery units 10A includes multiple first battery cells 10, and any two adjacent rows of battery units 10A among the multiple rows of battery units 10A are arranged offset from each other, making the first sidewalls 111 opposite each other in any two adjacent rows of battery units 10A be arranged offset from each other. Further, each first battery cell 10 in the battery 200 includes a second sidewall 112 connected to the first sidewall 111, and each first battery cell 10 is thermally conductively connected to an adjacent first battery cell 10 through at least one first sidewall 111 and at least one second sidewall 112.

In some examples, the battery 200 includes a box 30 and multiple rows of battery units 10A sequentially arranged in the first direction X. The multiple rows of battery units 10A are disposed within the box 30, each row of battery units 10A including multiple first battery cells 10 sequentially arranged in the second direction Y. Any two adjacent rows of battery units 10A among the multiple rows of battery units 10A are arranged offset from each other, making the first sidewalls 111 opposite each other in any two adjacent rows of battery units 10A offset from each other, with the second direction Y parallel to a length direction of the box 30. Further, partition plates 40 are provided within the box 30 to define multiple accommodation chambers 30a, each accommodation chamber 30a containing at least two rows of battery units 10A offset from each other. In this case, since any two adjacent rows of battery units 10A are arranged offset from each other, two rows of battery units 10A adj acent to each other in adjacent accommodation chambers 30a are also arranged offset from each other. Furthermore, the partition plates 40 are thermally conductively connected to adjacent battery units 10A and to the box 30. In this case, since any two adjacent rows of battery units 10A are arranged offset from each other, when battery units 10A are disposed on opposite sides of the same partition plate 40, the battery units 10A on two sides of the same partition plate 40 are also arranged offset from each other.

Referring to FIG. 6 to FIG. 8, in some embodiments of this application, first battery cells 10 offset from each other in adjacent rows are electrically connected through a busbar 50, meaning at least one first battery cell 10 in one row of battery units 10A among two adjacent rows of battery units 10A is electrically connected to one or more corresponding first battery cells 10 offset from each other in another row of battery units 10A through the busbar 50, achieving series or parallel connection of the first battery cells 10 offset from each other in adjacent rows. In this case, the arrangement of multiple first battery cells 10 in the battery unit 10A includes but is not limited to the arrangements shown in FIG. 6 to FIG. 8.

In the above technical solution, the busbar 50 connects the first battery cells 10 offset from each other in adjacent rows, which facilitates adjustment of the arrangement length and posture of the busbar 50 by setting the offset distance between the two first battery cells 10 offset from each other, enhancing the flexibility of the busbar 50 arrangement.

As an example, in the examples of FIG. 6 and FIG. 7, poles 12 of the first battery cells 10 offset from each other in adjacent rows are also arranged offset from each other in the second direction Y, which enables at least a portion of the busbar 50 to extend in a direction inclined relative to the first direction X and the second direction Y respectively under the premise of maintaining an appropriate distance between the poles 12 of the first battery cells 10 offset from each other in adjacent rows. Thus, this angled arrangement of the at least a portion of the busbar 50 reduces the length of the busbar 50, thereby shortening the current path, effectively reducing heat generation due to continuous overcurrent, reducing heat production. In addition, it prevents the additional energy loss caused by heat generation during overcurrent in the busbar 50 from resulting in low energy utilization efficiency, which thereby is conducive to enhancing the energy utilization efficiency of the battery 200. It can be understood that the extension direction of the at least a portion of the busbar 50 can be adjusted by adjusting the offset distance of the first battery cells 10 in adjacent rows.

Moreover, the busbar 50 with a short length is conducive to reducing the volume of the busbar 50, saving the space occupied by the busbar 50, arranging the battery 200 in a compact manner, improving the space utilization rate of the battery 200, and reducing the weight of the battery 200, thereby increasing the volumetric energy density and gravimetric energy density of the battery 200.

In some examples, as shown in FIG. 6, the first sidewalls 111 opposite each other in any two adjacent rows of battery units 10A among multiple battery units 10A of the battery 200 are arranged offset from each other, and the first battery cells 10 offset from each other in every two adjacent rows is electrically connected through a busbar 50, respectively.

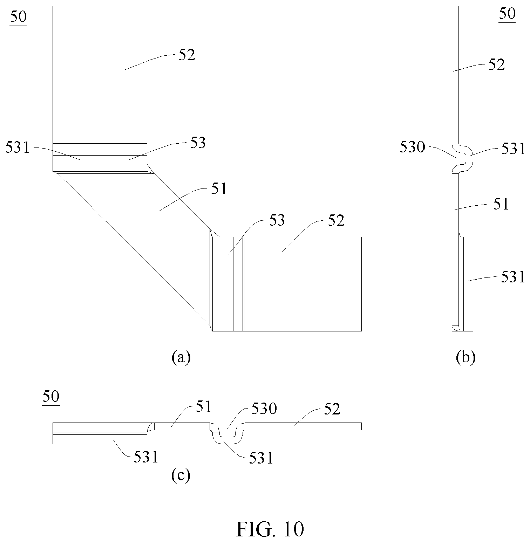

Referring to FIG. 6 to FIG. 11, in some embodiments of this application, the busbar 50 includes a transition portion 51 and two electrical connection portions 52. Two ends of the transition portion 51 are respectively connected to the two electrical connection portions 52, and an extension direction of the transition portion 51 forms an angle with both the first direction X and the second direction Y, meaning the transition portion 51 extends in a direction inclined relative to the first direction X and the second direction Y. Two ends of the transition portion 51 in its extension direction may be respectively connected to the two electrical connection portions 52, that is, one end of the transition portion 51 in its extension direction is connected to one electrical connection portion 52, and the other end of the transition portion 51 in its extension direction is connected to another electrical connection portion 52. The two electrical connection portions 52 are electrically connected to two first battery cells 10 respectively.

In the above technical solution, the busbar 50 includes a transition portion 51 and two electrical connection portions 52, with the extension direction of the transition portion 51 forming an angle with both the first direction X and the second direction Y, and the two electrical connection portions 52 being electrically connected to two first battery cells 10 respectively, which achieves an angled arrangement of the transition portion 51 of the busbar 50 under the premise of electrically connecting the two first battery cells 10. This is conducive to reducing the length of the transition portion 51, thereby shortening the current path, effectively reducing heat generation due to continuous overcurrent, reducing heat production. In addition, due to the shorter span of the busbar 50, this is conducive to implementing an offset arrangement of the busbar 50 and a pressure relief structure 13 of the first battery cell 10, lowering the probability of the busbar 50 obstructing the pressure relief structure 13 and reducing safety risks.

It can be understood that when the busbar 50 includes a transition portion 51 and two electrical connection portions 52, orthographic projections of the two electrical connection portions 52 in the first direction X may be spaced apart, and poles 12 of the two first battery cells 10 electrically connected to the two electrical connection portions 52 are also arranged offset from each other or spaced apart in the second direction Y. In this case, the two electrical connection portions 52 may be respectively electrically connected to poles 12 on the same side in the second direction of the two first battery cells 10 offset from each other in adjacent rows to further shorten the span of the busbar 50, which further facilitates an offset arrangement of the busbar 50 from the pressure relief structure 13 of the first battery cell 10 to further reduce the probability of the busbar 50 obstructing the pressure relief structure 13.

For example, taking the second direction being the left-right direction as an example, two first battery cells 10 in adjacent rows are arranged offset from each other in the left-right direction, each first battery cell 10 having two poles 12 spaced apart in the left-right direction. One of the electrical connection portions 52 of the busbar 50 is electrically connected to a pole 12 on the left side (or right side) of one of two first battery cells 10 offset from each other in adjacent rows, and another electrical connection portion 52 is electrically connected to a pole 12 on the left side (or right side) of the other of the two first battery cells 10 offset from each other in adjacent rows.

For example, in the example of FIG. 7, the battery 200 includes multiple rows of battery units 10A sequentially arranged in the first direction X, each row of battery units 10A includes multiple first battery cells 10, the busbar 50 includes a transition portion 51 and two electrical connection portions 52, and the outermost first battery cell 10 in the second direction of a battery unit 10A is electrically connected through the busbar 50 to the outermost first battery cell 10 in the second direction of an adjacent row of battery units 10A. Further, multiple first battery cells 10 in each row of battery units 10A are sequentially arranged in the second direction Y, and each first battery cell 10 in each row of battery units 10A is arranged offset from one or two corresponding first battery cells 10 in an adjacent row of battery units 10A. Any two adjacent first battery cells 10 in each row of battery units 10A are electrically connected through a second busbar 130, where the second busbar 130 may extend in a strip shape in the second direction.

Of course, in other examples, as shown in FIG. 6, FIG. 9 to FIG. 11, the battery 200 includes multiple rows of battery units 10A sequentially arranged in the first direction X, each row of battery units 10A includes multiple first battery cells 10, multiple first battery cells 10 in each row of battery units 10A are sequentially arranged in the second direction Y, and each first battery cell 10 in each row of battery units 10A is arranged offset from one or two corresponding first battery cells 10 in an adjacent row of battery units 10A. The busbar 50 includes a transition portion 51 and two electrical connection portions 52. In this case, each first battery cell 10 in each row of two adjacent rows of battery units 10A offset from each other is electrically connected through the busbar 50 to one or two first battery cells 10 offset from each other in the other row, respectively.

It can be seen that in the battery 200 of the embodiments of this application, any two adjacent first battery cells 10 offset from each other may be electrically connected through a busbar 50, respectively, or only a portion of the first battery cells 10 offset from each other among all first battery cells 10 are electrically connected through a busbar 50.

Referring to FIG. 6 to FIG. 12, in some embodiments of this application, the transition portion 51 is provided with a stretchable and deformable buffer portion 53, meaning the buffer portion 53 has a certain capability to stretch and deform under external force.

In the above technical solution, a stretchable and deformable buffer portion 53 is provided in the transition portion 51, which allows the busbar 50 to mitigate stress caused by the expansion of the first battery cell 10 during use of the battery 200 (for example, in later stages of usage), where the buffer portion 53 can undergo certain stretching deformation following the expansion of the first battery cell 10, reducing the pulling force of the busbar 50 on a pole 12 of the first battery cell 10, while the tensile force borne by the busbar 50 is decreased, lowering the risk of the busbar 50 being torn apart, and enhancing the reliability of use of the battery 200.

It can be understood that the specific position and number of the buffer portions 53 on the transition portion 51 can be specifically set according to actual needs. For example, the buffer portion 53 may be disposed at an end or middle of the transition portion 51 in its extension direction, and one or more buffer portions 53 may be provided.

Referring to FIG. 9 to FIG. 12, in some embodiments of this application, a stretchable and deformable buffer portion 53 is connected between each electrical connection portion 52 and the transition portion 51, meaning each electrical connection portion 52 is connected to the transition portion 51 through a buffer portion 53.

In the above technical solution, a stretchable and deformable buffer portion 53 is provided between each electrical connection portion 52 and the transition portion 51, which facilitates multi-stage relief of stress caused by the expansion of the first battery cell 10, enhancing the adaptability of the busbar 50 to the expansion and deformation of the first battery cell 10 and further improving the performance of the battery 200.

For example, in the examples of FIG. 9 to FIG. 11, one buffer portion 53 is provided between each electrical connection portion 52 and the transition portion 51, and at least one of the two buffer portions 53 may be configured to primarily stretch and deform in the first direction X, further enhancing the relief of stress on the busbar 50 caused by the expansion of the first battery cell 10. For example, one buffer portion 53 primarily stretches and deforms in the first direction X, while another buffer portion 53 primarily stretches and deforms in the second direction Y, allowing the busbar 50 to mitigate forces in multiple directions (including but not limited to the first direction X and the second direction Y, such as directions inclined relative to the first direction X and the second direction Y), effectively enhancing the adaptability of the busbar 50.

Of course, the configuration of the buffer portion 53 is not limited thereto. The buffer portion 53 may also be configured to stretch and deform in multiple directions, which facilitates appropriately reducing the number of buffer portions 53.

Referring to FIG. 9 to FIG. 11, in some embodiments of this application, the buffer portion 53 includes a bent portion 531 having at least an opening 530.

In the above technical solution, the buffer portion 53 includes a bent portion 531 having at least an opening 530, which allows the bent portion 531 to relieve stress by changing the width of the opening 530 under external force, with the bent portion 531 having a simple structure and being easy to process.

For example, the bent portion 531 may include a first segment and a second segment, where one end of the first segment is connected to one end of the second segment, and the other end of the first segment and the other end of the second segment are spaced apart to define the opening 530. The specific shapes of the first segment and the second segment are not specifically limited. For example, the first segment and the second segment may be flat plates, curved plates, or the like, and the bent portion 531 may be roughly U-shaped, V-shaped, C-shaped, or Q-shaped, or the like.

As an example, the buffer portion 53 is provided on the transition portion 51, where the transition portion 51 includes a first transition segment and a second transition segment; one of the other end of the first segment 5311 and the other end of the second segment 5312 is connected to the first transition segment, and the other is connected to the second transition segment; and the first transition segment is connected to one electrical connection portion 52, and the second transition segment is connected to another electrical connection portion 52. As an example, a buffer portion 53 is connected between each electrical connection portion 52 and the transition portion 51; and for each electrical connection portion 52, one of the other end of the first segment 5311 and the other end of the second segment 5312 is connected to the transition portion 51, and the other is connected to the electrical connection portion 52.

It can be understood that a cross-sectional shape of the bent portion 531 may be roughly an open ring shape, where "ring shape" should be broadly understood, including but not limited to circular ring, elliptical ring, and polygonal ring, or the like.

Referring to FIG. 11, in some embodiments of this application, the transition portion 51 is provided with a reinforcement member 54, where the reinforcement member 54 is a member made of conductive material.

In the above technical solution, a reinforcement member 54 made of a conductive material is provided in the transition portion 51, which can increase the current-carrying area of the transition portion 51 to enhance the current-carrying capacity of the busbar 50, thereby further mitigating temperature rise caused by overcurrent and improving the performance of the battery 200.

It can be understood that the material of the reinforcement member 54 and the transition portion 51 may be the same or different. As an example, both the reinforcement member and the transition portion 51 are metal pieces.

Referring to FIG. 11, in some embodiments of this application, the reinforcement member 54 and the transition portion 51 are arranged in a stacked manner, where the reinforcement member 54 and the transition portion 51 may be stacked in a thickness direction of the busbar 50, so that an orthographic projection of the reinforcement member 54 in the thickness direction of the busbar 50 at least partially overlaps with an orthographic projection of the transition portion 51 in the thickness direction of the busbar 50.

In the above technical solution, the reinforcement member 54 and the transition portion 51 are arranged in a stacked manner, allowing the busbar 50 to be roughly designed as a laminate, which can appropriately increase the thickness of the busbar 50 in the region corresponding to the transition portion 51, thereby enhancing the current-carrying capacity of the busbar 50 without significantly increasing the space occupied by the busbar 50 in the first direction X and the second direction Y. The number of stacked layers of the busbar 50 can be specifically set according to actual needs. For example, with one reinforcement member 54, the reinforcement member 54 and the transition portion 51 are stacked to make the busbar 50 roughly a double-layer design, or with multiple reinforcement members 54, the multiple reinforcement members 54 are stacked, and the multiple reinforcement members 54 and the transition portion 51 are stacked.

It can be understood that the reinforcement member 54 may be directly connected to the electrical connection portion 52, or the reinforcement member 54 may be connected to the electrical connection portion 52 through a current-carrying portion; where the specific shapes of the reinforcement member 54 and the transition portion 51 are not specifically limited in the embodiments of this application; and in the thickness direction of the busbar 50, an orthographic projection of the reinforcement member 54 may be entirely within an outer contour of an orthographic projection of the transition portion 51, or in the thickness direction of the busbar 50, a portion of an orthographic projection of the reinforcement member 54 may be outside an outer contour of an orthographic projection of the transition portion 51. In addition, the reinforcement member 54 may be stacked on a side of the transition portion 51 facing the first battery cell 10 or on a side of the transition portion 51 facing away from the first battery cell 10.

As an example, the transition portion 51, the electrical connection portion 52, the buffer portion 53, and the reinforcement member 54 are integrally formed; for example, the busbar 50 may be a bent formed piece.

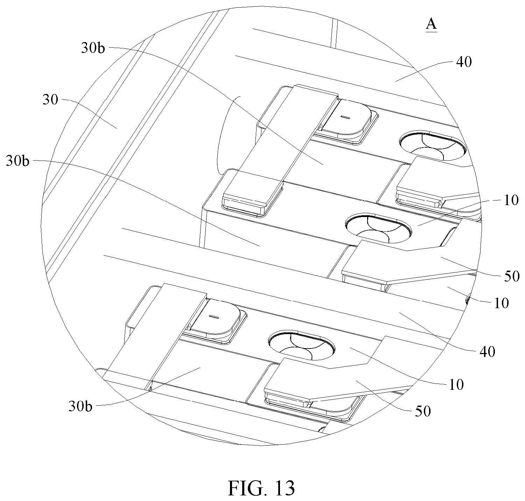

Referring to FIG. 12, FIG. 13, FIG. 20, and FIG. 21, in some embodiments of this application, the battery 200 further includes a box 30, where multiple rows of battery units 10A are disposed within the box 30, and an offset space 30b is provided between adjacent rows of battery units 10A offset from each other and an inner wall of the box 30, with a filler 60 provided within the offset space 30b. In this case, the arrangement of multiple first battery cells 10 in the battery unit 10A includes but is not limited to the arrangements shown in FIG. 4 to FIG. 8.

It can be seen that for in adjacent rows of battery units 10A offset from each other, at least one row of battery units 10A extends beyond another row of battery units 10A in at least one end in the second direction Y, so that the adjacent rows of battery units 10A and the box 30 together define the offset space 30b. As an example, for adjacent rows of battery units 10A offset from each other, one end of one row of battery units 10A in the second direction Y extends beyond another row of battery units 10A, and the other end of the one row of battery units 10A in the second direction Y is flush with the other row of battery units 10A. In this case, an offset space 30b is provided on one side of the two rows of battery units 10A in the second direction Y. Alternatively, one end of one row of battery units 10A in the second direction Y extends beyond another row of battery units 10A, and the other end of the other row of battery units 10A in the second direction Y extends beyond the one row of battery units 10A. In this case, offset spaces 30b are provided on two sides of the two rows of battery units 10A in the second direction Y. Alternatively, two ends of one row of battery units 10A in the second direction Y extend beyond another row of battery units 10A. In this case, offset spaces 30b are provided on two sides of the two rows of battery units 10Ain the second direction Y.

In the above technical solution, an offset space 30b is provided between the adjacent rows of battery units 10A offset from each other and the inner wall of the box 30, with a filler 60 provided within the offset space 30b, to effectively reduce the space loss in the battery 200 due to the offset arrangement of adjacent rows of battery units 10A, and the residual design space of the battery 200 is rationally utilized, thereby enhancing the space utilization rate of the battery 200.

For example, in the examples of FIG. 6, FIG. 7, FIG. 12, and FIG. 13, each row of battery units 10A includes multiple first battery cells 10, each first battery cell 10 includes a second sidewall 112 connected to the first sidewall 111, and an offset space 30b is provided between an exposed second sidewall 112 of one row of the adjacent rows of battery units 10A offset from each other, an exposed first sidewall 111 of another row, and the inner wall of the box 30. When there are three or more rows of battery units 10A offset from each other, the offset space 30b may be provided between exposed first sidewalls 111 of two rows, an exposed second sidewall 112 of the remaining row, and the inner wall of the box 30. In this case, each first battery cell 10 can be thermally conductively connected to an adjacent first battery cell 10 through at least one first sidewall 111 and at least one second sidewall 112.

It can be understood that when the battery 200 further includes partition plates 40, multiple accommodation chambers 30a are defined within the box 30, with each accommodation chamber 30a containing at least two rows of battery units 10A offset from each other. In this case, for a battery unit 10A disposed adjacent to a partition plate 40, if the battery unit 10A is arranged offset from a battery unit 10A of an adjacent row, an offset space 30b may be provided between the two adjacent rows of battery units 10A, the inner wall of the box 30, and the corresponding partition plate 40.

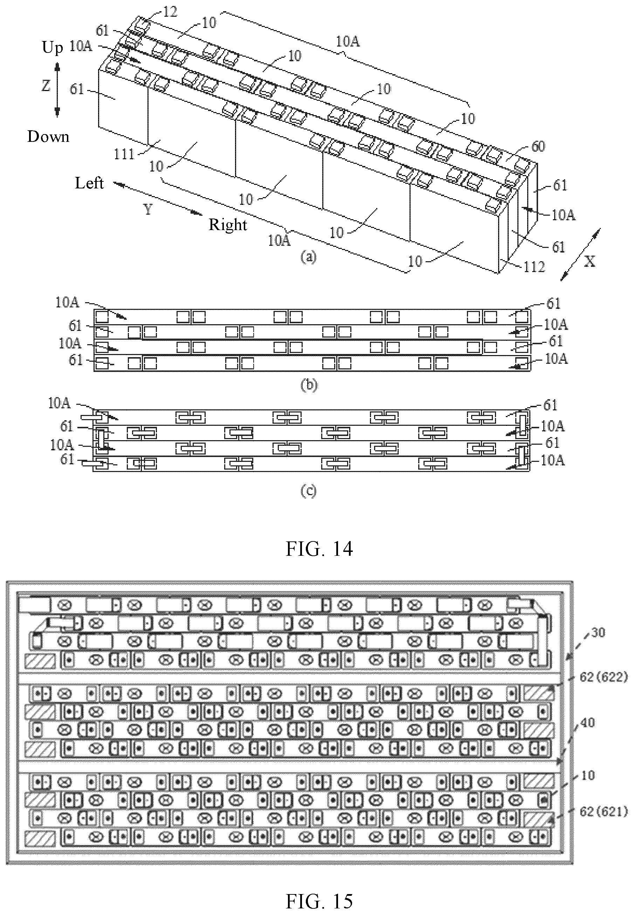

Referring to FIG. 14, in some embodiments of this application, the filler 60 includes a second battery cell 61, where the second battery cell 61 is disposed within the offset space 30b and electrically connected to the first battery cell 10. Both the second battery cell 61 and the first battery cell 10 have an energy storage function and can be used to provide electrical energy. For example, specifications of the second battery cell 61 may differ from those of the first battery cell 10.

In the above technical solution, a second battery cell 61 is disposed within the offset space 30b to effectively utilize the offset space 30b created by the offset arrangement of multiple first battery cells 10, enhancing the space utilization rate (or volumetric utilization rate) of the battery 200 and increasing the volumetric energy density and gravimetric energy density of the battery 200.

As an example, a shape and size of the second battery cell 61 match a shape and size of the corresponding offset space 30b.

For example, in the examples of FIG. 2 and FIG. 14, sidewalls of the first battery cell 10 and the second battery cell 61 in the third direction are fixed to an inner wall of the box 30. Taking the third direction being the up-down direction as an example, top sidewalls of the first battery cell 10 and the second battery cell 61 are respectively provided with poles 12, a bottom sidewall of the first battery cell 10 is fixed to the inner wall of the box 30, such as by adhesive bonding with structural glue, and a bottom sidewall of the second battery cell 61 is fixed to the inner wall of the box 30, such as by adhesive bonding with structural glue, which is conducive to enhancing the connection strength between the first battery cell 10 and the second battery cell 61 and the box 30 and improving the overall structural stability of the battery 200.

Referring to FIG. 14, in some embodiments of this application, a volume of the second battery cell 61 is smaller than a volume of the first battery cell 10.

In the above technical solution, the volume of the second battery cell 61 is set to be smaller than the volume of the first battery cell 10, which is conducive to matching the volume of the second battery cell 61 to the capacity of the offset space 30b. Because the offset space 30b is formed by the cooperation between adjacent rows of battery units 10A offset from each other and the box 30, the capacity of the offset space 30b is typically smaller than the volume of the first battery cell 10. This is conducive to improving the matching between the second battery cell 61 and the offset space 30b, facilitating the arrangement of the second battery cell 61.

Moreover, a second battery cell 61 is disposed within the offset space 30b, which is conducive to reducing a distance between an end of a battery 200 group formed by the second battery cell 61 and one row of battery units 10A where the second battery cell 61 is disposed, and an end of another row of battery units 10A corresponding to the offset space 30b, lowering the structural requirements on the inner wall of the box 30, and facilitating a flat arrangement of the inner wall of the box 30.

As an example, a shape of the second battery cell 61 matches a shape of the offset space 30b; for example, both the second battery cell 61 and the offset space 30b are cuboid structures. As an example, both the second battery cell 61 and the first battery cell 10 are cuboid structures, where a volume of the second battery cell 61 is basically a product of a length, width, and height of the second battery cell 61, and a volume of the first battery cell 10 is basically a product of a length, width, and height of the first battery cell 10.

Referring to FIG. 14, in some embodiments of this application, in the second direction Y, a sidewall 11 of the second battery cell 61 is flush with an end face of a battery unit 10A in an adjacent row. "Flush arrangement" includes but is not limited to these two surfaces being on the same plane.

In the above technical solution, the sidewall 11 of the second battery cell 61 is flush with the end face of a battery unit 10A in an adjacent row in the second direction Y, so that a battery 200 group formed by the second battery cell 61 and the aligned battery unit 10A can be more regularly arranged with the adjacent battery units 10A, which is conducive to simplifying a shape of an internal space of the box 30 and rationally utilizing the internal space of the box 30.

For example, in the example of FIG. 14, both the first battery cell 10 and the second battery cell 61 are cuboid structures. Taking a case where offset spaces 30b are respectively provided on two sides of adjacent rows of battery units 10A offset from each other in the second direction Y as an example, each offset space 30b is respectively provided with a second battery cell 61; the provision of each second battery cell 61 is conducive to an end of a battery 200 group formed by the second battery cell 61 and an aligned battery unit 10A in the second direction Y being flush with an end of another row of battery units 10A corresponding to a first offset space 30b, thereby simplifying a structure of an inner wall of the box 30. For instance, taking the second direction Y being the left-right direction as an example, offset spaces 30b are respectively provided on two sides of adjacent rows of battery units 10A offset from each other in the left-right direction, each offset space 30b being respectively provided with a second battery cell 61; and the provision of a left second battery cell 61 is conducive to a left sidewall 11 of the second battery cell 61 being flush with a left end face of another row of battery units 10A, and the provision of a right second battery cell 61 is conducive to a right sidewall 11 of the second battery cell 61 being flush with a right end face of another row of battery units 10A.

Referring to FIG. 14, in some embodiments of this application, the first battery cell 10 and the second battery cell 61 are electrically connected at least in series, where a chemical system of the second battery cell 61 differs from a chemical system of the first battery cell 10.

Optionally, when there is one second battery cell 61, the second battery cell 61 is connected in series with a corresponding first battery cell 10; alternatively, when there is one second battery cell 61, the second battery cell 61 is connected in series with at least one first battery cell 10, and the second battery cell 61 is connected in parallel with at least one first battery cell 10. When there are multiple second battery cells 61, an electrical connection method for the multiple second battery cells 61 may be the same or different; for a single second battery cell 61, the second battery cell 61 and the first battery cell 10 are electrically connected at least in series.

In the above technical solution, a chemical system of the second battery cell 61 differs from a chemical system of the first battery cell 10, which allows the second battery cell 61 and the first battery cell 10 to be different in performance; and the first battery cell 10 and the second battery cell 61 are electrically connected at least in series, which is conducive to improving the overall performance of the battery 200 through the second battery cell 61. For example, if the second battery cell 61 selected with an appropriate chemical system has a higher low-temperature discharge specific power density compared to the first battery cell 10, the above connection method enables the discharge capability of the battery 200 to be enhanced and is conducive to simplifying an electrical connection method of the battery 200 and simplifying a structural design of the battery 200.

It can be understood that a chemical system of a battery cell includes but is not limited to a lithium iron phosphate system, a ternary lithium system, a lithium manganate system, or the like.

As an example, a low-temperature discharge specific power density of the second battery cell 61 is higher than that of the first battery cell 10. For example, at - 25°C and 100% state of charge (SOC), the discharge specific power density P2 of the second battery cell 61 is higher than the discharge specific power density P1 of the first battery cell 10. For example, a specific power density at 25°C and 100% state of charge (SOC) is a ratio of a discharge power of a battery cell at 25°C and 100% SOC to a nominal capacity of the battery cell, with a unit of W/Ah; and a specific power density at 25°C and 10% state of charge (SOC) is a ratio of a discharge power of a battery cell at 25°C and 10% SOC to a nominal capacity of the battery cell, with a unit of W/Ah.

For example, the first battery cell 10 and the second battery cell 61 satisfy at least one of the following conditions to enable the second battery cell 61 to have better low-temperature performance, thereby enhancing a low-temperature discharge capability of the battery 200: condition 1, a resistance per unit area Rc2 of a positive electrode plate of the second battery cell 61 is lower than a resistance per unit area Rc1 of a positive electrode plate of the first battery cell 10, and 0.05 Ω/cm² ≤ Rc2 < Rc1 ≤ 10 Ω/cm²; condition 2, a resistance per unit area Ra2 of a negative electrode plate of the second battery cell 61 is lower than a resistance per unit area Ra1 of a negative electrode plate of the first battery cell 10, and 0.05 Ω/cm² ≤ Ra2 < Ra1 ≤ 10 Ω/cm²; condition 3, an air permeability G2 of a separator of the second battery cell 61 is lower than an air permeability G1 of a separator of the first battery cell 10, and satisfies 180 s/100 cc ≤ G2 < G1 ≤ 400 s/100 cc; condition 4, an ionic conductivity σ1 of an electrolyte of the first battery cell 10 at -25°C is lower than an ionic conductivity σ2 of an electrolyte of the second battery cell 61, and 1 mS/cm ≤ σ1 < σ2 ≤ 20 mS/cm; condition 5, a positive electrode plate of the first battery cell 10 contains a first active material, where the first active material includes at least one of lithium iron phosphate (LFP), lithium cobalt oxide (LCO), lithium nickel cobalt manganese oxide (NCM), or lithium nickel cobalt aluminum oxide (NCA), and a positive electrode plate of the second battery cell 61 contains a second active material, where the second active material includes at least one of NaMO₂ (M = Ni, Co, Mn, Fe, V), NaMPO₄ (M = Fe, Mn, Mg, Ca, V), or NaₓM[Fe(CN)₆] (x = 1 to 2, M = Fe, Mn, Co); or condition 6, a negative electrode plate of the first battery cell 10 contains a third active material, where the third active material includes at least one of artificial graphite, natural graphite, mesocarbon microbeads, silicon monoxide, silicon carbide, lithium titanate, hard carbon, or soft carbon, and a negative electrode plate of the second battery cell 61 contains a fourth active material, where the fourth active material includes at least one of hard carbon or soft carbon.

Optionally, for the first battery cell 10, a positive electrode active material adopts an NCM active material, a negative electrode active material is artificial graphite, a separator is a porous polyethylene separator, an electrolyte lithium salt is LiPF₆, and solvents are EC, DMC, EMC; for the second battery cell 61, a positive electrode active material adopts NaFe[Fe(CN)₆], a negative electrode active material is hard carbon, a separator is a porous polyethylene separator, an electrolyte lithium salt is NaPF₆, and solvents are EC, DMC, EMC.

Referring to FIG. 15, in some embodiments of this application, the filler 60 includes a monitor 62 configured to monitor the operating status of each of the first battery cells 10.

In the above technical solution, the filler 60 including a monitor 62 is provided, and the monitor 62 is configured to monitor the operating status of each of the first battery cells 10, which facilitates the placement of the monitor 62 while enhancing the operational safety of the battery 200.

As an example, the monitor 62 includes at least one of an air pressure sensor 621, a gas analysis sensor, a lithium precipitation monitor 622, or the like. For example, the monitor 62 monitors the operating status of each of the first battery cells 10 in at least one row of battery units 10A through a sensing line, where the operating status of the first battery cell 10 includes but is not limited to the positive voltage and negative voltage of the first battery cell 10 and a position of a pressure relief structure 13, so as to achieve monitoring of the performance and safety of the first battery cells 10.

Optionally, the monitor 62 may be fixed to the box 30 and/or at least one corresponding first battery cell 10 by welding, and/or the monitor 62 may be sandwiched between two opposite first battery cells 10 to be fixed by a preload force between the two first battery cells 10.

In some examples, the filler 60 includes a second battery cell 61 and a monitor 62. In this case, the second battery cell 61 and the monitor 62 may be located in a same offset space 30b or respectively disposed in different offset spaces 30b.

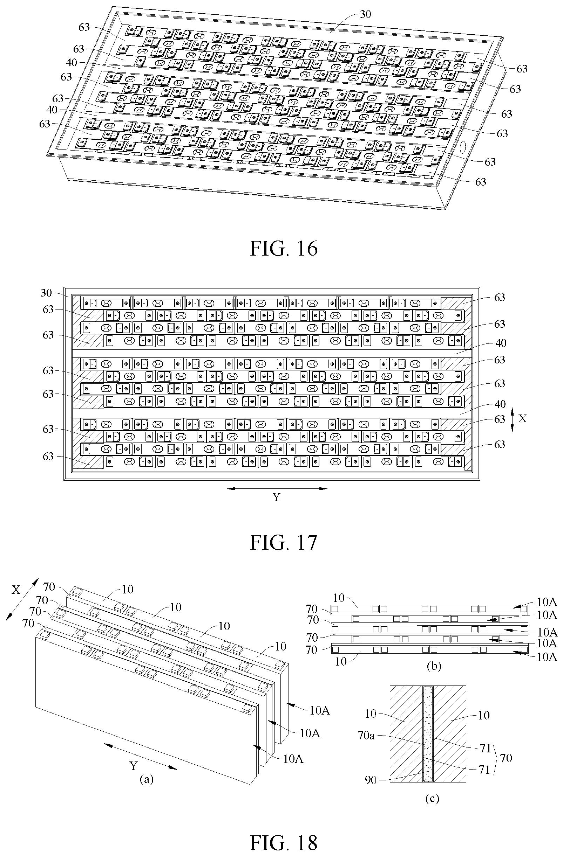

Referring to FIG. 16 and FIG. 17, in some embodiments of this application, the filler 60 includes a thermally conductive filler member 63 thermally conductively connected to the box 30, where the thermally conductive filler member 63 is configured to direct heat from a corresponding first battery cell 10 to the box 30.

In the above technical solution, the filler 60 includes a thermally conductive filler member 63 configured to direct heat from a corresponding first battery cell 10 to the box 30, which further enhances the dispersed transfer of heat from the first battery cell 10, thereby further suppressing thermal diffusion.

It can be understood that the thermally conductive filler member 63 is thermally conductively connected to the box 30, and the position of the thermal conductive connection between the thermally conductive filler member 63 and the box 30 is not specifically limited in this application. For example, at least one side surface of the thermally conductive filler member 63 in the third direction Z is thermally conductively connected to a corresponding wall of the box 30, and/or one side surface of the thermally conductive filler member 63 in the second direction Y is thermally conductively connected to a corresponding wall of the box 30.

For example, in the examples of FIG. 3, FIG. 16, and FIG. 17, each row of battery units 10A includes multiple first battery cells 10, each first battery cell 10 includes a second sidewall 112 connected to the first sidewall 111, an offset space 30b is provided between an exposed second sidewall 112 of one row of the adjacent rows of battery units 10A offset from each other, an exposed first sidewall 111 of another row, and an inner wall of the box 30, and the thermally conductive filler member 63 is thermally conductively connected to at least one of the second sidewall 112 and the first sidewall 111 participating in defining the corresponding offset space 30b. For three or more rows of battery units 10A offset from each other, the offset space 30b may be provided between exposed first sidewalls 111 of two rows, an exposed second sidewall 112 of the remaining row, and the inner wall of the box 30, and the thermally conductive filler member 63 is thermally conductively connected to at least one of the two first sidewalls 111 and the second sidewall 112 participating in defining the corresponding offset space 30b. In this case, each first battery cell 10 may be thermally conductively connected to an adjacent first battery cell 10 through at least one first sidewall 111 and at least one second sidewall 112.

Optionally, in the examples of FIG. 16 and FIG. 17, in the second direction, thermally conductive filler members 63 within at least two offset spaces 30b on the same side of the battery 200 are integrally formed. Further, in the example of the figures, partition plates 40 are provided within the box 30 to define multiple accommodation chambers 30a within the box 30, with at least one accommodation chamber 30a containing three or more rows of battery units 10A, so that multiple offset spaces 30b are respectively provided on one or two sides of the at least one accommodation chamber 30a in the second direction; thermally conductive filler members 63 are respectively disposed within at least two of the multiple offset spaces 30b, and the thermally conductive filler members 63 within the at least two offset spaces 30b are an integral piece.

In some examples, the filler 60 includes a second battery cell 61 and a thermally conductive filler member 63. In this case, the second battery cell 61 and the thermally conductive filler member 63 may be located in the same offset space 30b or respectively disposed in different offset spaces 30b. In some other examples, the filler 60 includes a monitor 62 and a thermally conductive filler member 63. In this case, the monitor 62 and the thermally conductive filler member 63 may be located in the same offset space 30b or respectively disposed in different offset spaces 30b. In still other examples, the filler 60 includes a second battery cell 61, a monitor 62, and a thermally conductive filler member 63.

Referring to FIG. 18 to FIG. 20, in some embodiments of this application, the battery 200 further includes a thermally conductive reinforcement member 70 and a box 30, where at least two first battery cells 10 are disposed within the box 30, at least one first battery cell 10 is thermally conductively connected to the thermally conductive reinforcement member 70, and the thermally conductive reinforcement member 70 is thermally conductively connected to the box 30. In this case, if the battery 200 includes multiple rows of battery units 10A, the arrangement of multiple first battery cells 10 in the battery unit 10A includes but is not limited to the arrangements shown in FIG. 4 to FIG. 8. When the battery 200 includes a box 30, if an offset space 30b is provided between adjacent rows of battery units 10A offset from each other and an inner wall of the box 30, a filler 60 may or may not be provided within the offset space 30b.

In the above technical solution, the thermally conductive reinforcement member 70 is thermally conductively connected to at least one first battery cell 10 and to the box 30, which allows the thermally conductive reinforcement member 70 to direct heat from at least one first battery cell 10 to the box 30, further enhancing the dispersed transfer of heat from the first battery cell 10 and suppressing thermal diffusion. In addition, the thermally conductive reinforcement member 70 provides a certain structural reinforcement to the first battery cell 10 and/or the box 30, enhancing the reliability of use of the battery 200.

Optionally, the thermally conductive reinforcement member 70 has a first side surface and a second side surface, where the first side surface and the second side surface are respectively located on different sides of the thermally conductive reinforcement member 70; the first side surface is thermally conductively connected to the first battery cell 10, and the second side surface is thermally conductively connected to the box 30, facilitating adaptation of the thermally conductive reinforcement member 70 to the arrangement of the first battery cell 10 and the box 30.

Optionally, the battery 200 includes multiple rows of battery units 10A, each row of battery units 10A includes multiple first battery cells 10, multiple rows of battery units 10A are sequentially arranged in the first direction X, and the thermally conductive reinforcement member 70 is thermally conductively connected to at least one first battery cell 10 in at least one row of battery units 10A.

Optionally, the thermally conductive reinforcement member 70 is fixedly connected to the box 30; for example, the thermally conductive reinforcement member 70 is fixed to the box 30 by welding; of course, the thermally conductive reinforcement member 70 may also be connected to the box 30 by other means.

Referring to FIG. 15 to FIG. 20, in some embodiments of this application, the thermally conductive reinforcement member 70 is sandwiched between first battery cells 10 opposite each other in the first direction X, where the thermally conductive reinforcement member 70 is thermally conductively connected to the first sidewall 111 of a corresponding first battery cell 10.

In the above technical solution, the thermally conductive reinforcement member 70 is thermally conductively connected to the first sidewalls 111 of first battery cells 10 opposite each other in the first direction X, which facilitates increasing the heat exchange area between the thermally conductive reinforcement member 70 and the corresponding first battery cell 10, thereby enhancing the heat transfer efficiency between the thermally conductive reinforcement member 70 and the first battery cell 10 and improving the temperature control effect of the battery 200. Furthermore, the thermally conductive reinforcement member 70 provides a certain reinforcement to the first sidewall 111 of the corresponding first battery cell 10, increasing the deformation resistance of the first sidewall 111 of the corresponding first battery cell 10, thereby reducing the probability of issues such as local lithium precipitation or thermal runaway due to uneven stress on the first battery cell 10.

It can be understood that, in the first direction X, one or more first battery cells 10 located on the same side of the thermally conductive reinforcement member 70 are thermally conductively connected to the thermally conductive reinforcement member 70.

Optionally, the battery 200 includes multiple rows of battery units 10A sequentially arranged in the first direction X, each row of battery units 10A including multiple first battery cells 10, where the thermally conductive reinforcement member 70 is sandwiched between two adjacent rows of battery units 10A and thermally conductively connected to the first sidewall 111 of at least one first battery cell 10 in each row of battery units 10A. Further, each battery unit 10A includes multiple first battery cells 10 sequentially arranged in the second direction Y, and the thermally conductive reinforcement member 70 is thermally conductively connected to the first sidewall 111 of each first battery cell 10 in the corresponding battery unit 10A.

Of course, in other embodiments, the thermally conductive reinforcement member 70 may also be thermally conductively connected to other sidewalls 11 of a corresponding first battery cell 10; and a thermally conductive reinforcement member 70 may also be provided between an inner wall of the box 30 and a battery unit 10A.

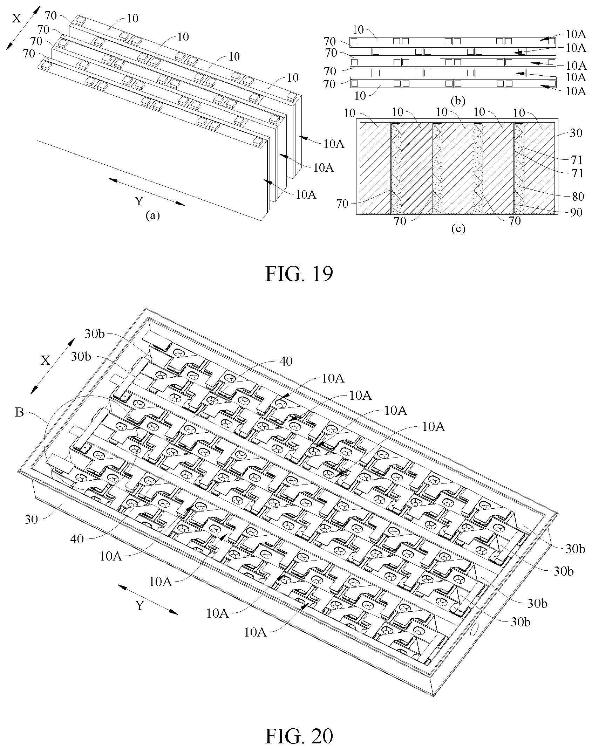

Referring to FIG. 18 and FIG. 19, in some embodiments of this application, a cavity 70a configured to buffer stress is provided within the thermally conductive reinforcement member 70, where the cavity 70a is configured to deform when the thermally conductive reinforcement member 70 is under pressure, so as to buffer stress.

In the above technical solution, a cavity 70a configured to buffer stress is provided within the thermally conductive reinforcement member 70. Because of the provision of the cavity 70a, the thermally conductive reinforcement member 70 can deform when subjected to the force from an expanding first battery cell 10 during use, reducing the squeezing force between the thermally conductive reinforcement member 70 and the first battery cell 10, avoiding damage to the thermally conductive reinforcement member 70 and the first battery cell 10, and enhancing the reliability of the thermally conductive reinforcement member 70 and the first battery cell 10. In addition, the cavity 70a facilitates the absorption of assembly tolerances for the first battery cells 10 arranged in rows during the assembly of the thermally conductive reinforcement member 70 and the first battery cells 10, improving the assembly convenience of the thermally conductive reinforcement member 70 and the first battery cell 10. Furthermore, the provision of the cavity 70a reduces the weight of the thermally conductive reinforcement member 70, thereby reducing the weight of the battery 200 and increasing the gravimetric energy density of the battery 200.

Referring to FIG. 18 and FIG. 19, in some embodiments of this application, the thermally conductive reinforcement member 70 includes two thermally conductive sidewalls 71 opposite each other, where the thermally conductive sidewall 71 is thermally conductively connected to the opposite first sidewalls 111, and a support structure 80 respectively connected to the two thermally conductive sidewalls 71 is provided within the cavity 70a.

In the above technical solution, a support structure 80 respectively connected to the two thermally conductive sidewalls 71 is provided within the cavity 70a, which allows the support structure 80 to support the two thermally conductive sidewalls 71, increasing a resistance of the thermally conductive reinforcement member 70 to bending deformation and enhancing the reliability of the thermally conductive reinforcement member 70.

As an example, the two thermally conductive sidewalls 71 of the thermally conductive reinforcement member 70 are arranged opposite each other in the first direction X, the cavity 70a is located between the two thermally conductive sidewalls 71, each thermally conductive sidewall 71 extends in the second direction Y, and the thermally conductive reinforcement member 70 has a simple structure and is easy to process.

Referring to FIG. 18 and FIG. 19, in some embodiments of this application, the support structure 80 is formed as a mesh structure, with a heat-absorbing material member 90 filled within the mesh structure, meaning the heat-absorbing material member 90 is also disposed within the cavity 70a.

In the above technical solution, the support structure 80 is provided as a mesh structure, with the heat-absorbing material member 90 provided within the cavity 70a, which reduces the obstruction of the support structure 80 to the heat-absorbing material member 90. This is conducive to enhancing the filling capacity of the heat-absorbing material member 90 in the cavity 70a, facilitating contact between the heat-absorbing material member 90 and the thermally conductive sidewalls 71 to improve thermal conductivity, while the weight of the support structure 80 is not excessively increased, avoiding an excessive weight increase of the thermally conductive reinforcement member 70. This is also conducive to reducing requirements on the physical state of the heat-absorbing material member 90, and the requirements for the physical state change of the heat-absorbing material member 90 can be lowered if the heat-absorbing material member 90 undergoes a physical state change during heat absorption.

Optionally, the heat-absorbing material member 90 includes at least one of paraffin, fatty acid, or polyethylene.

Optionally, the heat-absorbing material member 90 is a phase-change heat-absorbing material member, for example, a solid-liquid phase-change material member. At high temperatures, the phase-change heat-absorbing material member 90 undergoes a solid-liquid phase change while absorbing heat, to further enhance a heat absorption and thermal conductivity capability of the thermally conductive reinforcement member 70 and reduce heat transferred from the first battery cell 10 to other first battery cells 10 opposite each other in the first direction X, further suppressing thermal diffusion and improving the safety of the battery 200.

Optionally, multiple sub-chambers spaced apart are defined between the support structure 80 and each thermally conductive sidewall 71, where adjacent sub-chambers are interconnected, and the heat-absorbing material member 90 is disposed within the multiple sub-chambers, facilitating a certain support of each thermally conductive sidewall 71 by the support structure 80, while allowing a spacing between the two thermally conductive sidewalls 71 to change under external force, better balancing stress buffering and bending resistance.

Further optionally, in a cross-section parallel to the first direction X and the second direction Y, a cross-section of each sub-chamber is triangular, ensuring appropriate support of the two thermally conductive sidewalls 71 by the support structure 80. As an example, sub-chambers defined between the support structure 80 and one thermally conductive sidewall 71 are referred to as first sub-chambers, and sub-chambers defined between the support structure 80 and another thermally conductive sidewall 71 are referred to as second sub-chambers; and a cross-section of both the first sub-chambers and the second sub-chambers is triangular, and multiple first sub-chambers and multiple second sub-chambers are alternately arranged one by one in the second direction Y. Of course, a cross-sectional shape of the sub-chambers is not limited thereto.

In other embodiments, the heat-absorbing material member 90 may be replaced with a member made of thermally conductive material. In still other embodiments, a heat-absorbing material member 90 may be provided within the cavity 70a without a support structure 80.

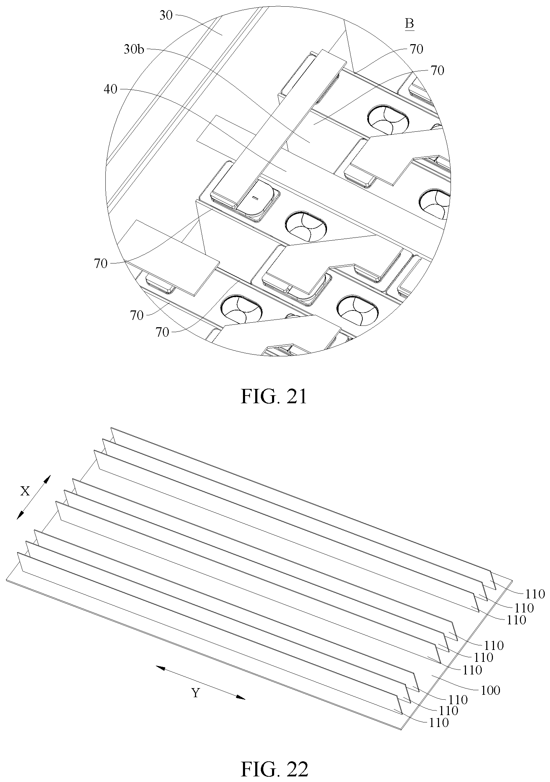

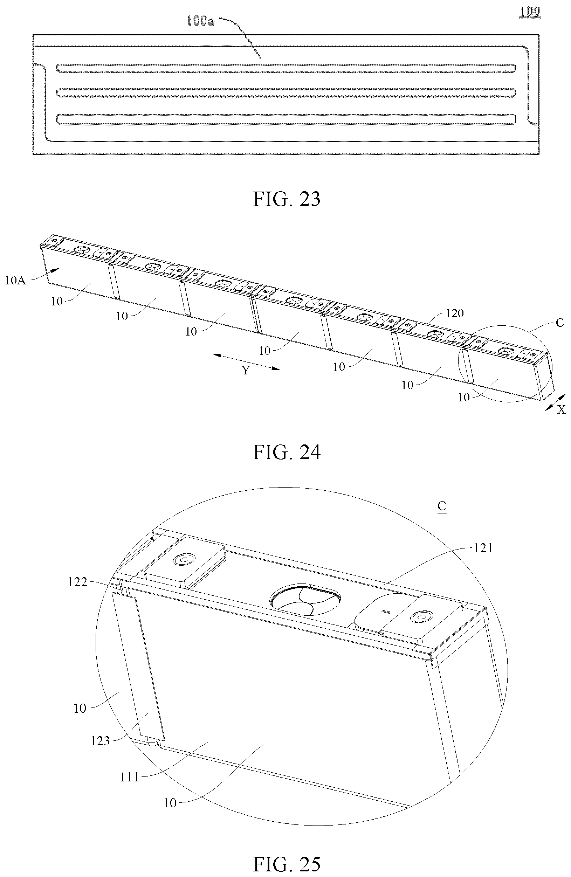

Referring to FIG. 22 and FIG. 23, in some embodiments of this application, the battery 200 further includes a heat exchange plate 100 and a thermally conductive insert 110, where in a third direction Z, the heat exchange plate 100 is located on one side of at least two first battery cells 10, the third direction Z being perpendicular to the first direction X and the second direction Y respectively; and a heat exchange channel 100a configured to accommodate a heat exchange medium is provided within the heat exchange plate 100, and the insert 110 is disposed on a surface of the heat exchange plate 100 close to the first battery cell 10 and thermally conductively connected to the first battery cell 10. In this case, if the battery 200 includes multiple rows of battery units 10A, the arrangement of multiple first battery cells 10 in the battery unit 10A includes but is not limited to the arrangements shown in FIG. 4 to FIG. 8.

In the above technical solution, a heat exchange plate 100 and an insert 110 are provided, with a heat exchange channel 100a configured to accommodate a heat exchange medium within the heat exchange plate 100 and the insert 110 thermally conductively connected to the first battery cell 10, so that the heat exchange plate 100 can exchange heat with the first battery cell 10 at least through the insert 110, further reducing heat transferred from the first battery cell 10 to other first battery cells 10, thereby further suppressing thermal diffusion. For example, the heat exchange plate 100 and the insert 110 can dissipate heat from a first battery cell 10 experiencing thermal runaway. Of course, under conditions such as 4C fast charging, heat from the first battery cell 10 can be carried away through the heat exchange plate 100 and the insert 110.

As an example, taking the third direction Z being an up-down direction as an example, the heat exchange plate 100 is located on a lower side of multiple first battery cells 10, one or more inserts 110 are provided, and the insert 110 is disposed on an upper surface of the heat exchange plate 100 and thermally conductively connected to multiple first battery cells 10. In this case, the heat exchange plate 100 may be fixed to a bottom wall of the box 30, such as by adhesive bonding. Of course, the insert 110 may also be thermally conductively connected to one first battery cell 10.

Optionally, the heat exchange plate 100 is thermally conductively connected to at least two first battery cells 10, enriching heat transfer methods between the heat exchange plate 100 and the first battery cells 10 to disperse heat from the first battery cells 10 and facilitate further suppression of thermal diffusion.

It can be understood that when a temperature of the first battery cell 10 is too high, the heat exchange plate 100 can be used to cool the first battery cell 10, reducing the temperature of the first battery cell 10; and when a temperature of the first battery cell 10 is too low, the heat exchange plate 100 can be used to heat the first battery cell 10, increasing the temperature of the first battery cell 10. The heat exchange medium may be a liquid and/or a gas, and the heat exchange plate 100 is configured to regulate a temperature of at least two first battery cells 10. In a case that the heat exchange plate 100 is used to cool the first battery cell 10, the heat exchange channel 100a may accommodate a cooling medium to regulate a temperature of multiple first battery cells 10; and in this case, the heat exchange medium may also be referred to as a cooling medium or cooling fluid, more specifically as a coolant or cooling gas. Optionally, the heat exchange medium may be water, a mixture of water and ethylene glycol, thermally conductive oil, refrigerant, or air, or the like.

Optionally, the heat exchange channel 100a may have an inlet and an outlet to facilitate flow of the heat exchange medium, enhancing heat exchange efficiency.

Optionally, the battery 200 includes multiple rows of battery units 10A sequentially arranged in the first direction, and each battery unit 10A includes multiple first battery cells 10. In the third direction Z, the heat exchange plate 100 is located on one side of all first battery cells 10. In this case, the heat exchange plate 100 may be configured to achieve thermal management of all first battery cells 10. Further optionally, the heat exchange channel 100a may be configured to include multiple subchannels spaced apart in the first direction, each sub-channel may extend along the second direction, and each sub-channel may correspond to one row of battery units 10A.

Referring to FIG. 22, in some embodiments of this application, the first sidewall 111 of at least one first battery cell 10 is thermally conductively connected to the insert 110.

In the above technical solution, the insert 110 is thermally conductively connected to the first sidewall 111 of at least one first battery cell 10, which facilitates increasing the heat exchange area between the insert 110 and the corresponding first battery cell 10, enhancing the heat transfer efficiency between the insert 110 and the first battery cell 10 and improving a temperature control effect of the battery 200. In addition, the insert 110 provides a certain reinforcement to the first sidewall 111 of the corresponding first battery cell 10, increasing the deformation resistance of the first sidewall 111 of the corresponding first battery cell 10, thereby reducing the probability of issues such as local lithium precipitation or thermal runaway due to uneven stress on the first battery cell 10.

As an example, the battery 200 includes multiple rows of battery units 10A sequentially arranged in the first direction X, each battery unit 10A includes multiple first battery cells 10, an insert 110 is provided between two adjacent rows of battery units 10A, and/or an insert 110 is provided between a battery unit 10A and an inner wall of the box 30. For a single insert 110, the insert 110 may be thermally conductively connected to at least one first sidewall 111 of at least one row of battery units 10A, and in this case, the insert 110 can be thermally conductively connected to the first sidewall 111 of at least one first battery cell 10 in a corresponding battery unit 10A. Further, each battery unit 10A includes multiple first battery cells 10 sequentially arranged in the second direction Y, and the insert 110 may be thermally conductively connected to the first sidewall 111 of each first battery cell 10 in a corresponding battery unit 10A.

Optionally, the insert 110 is a plate-like structure, where a "large face" of the insert 110 is thermally conductively connected to a "large face" of the first battery cell 10. In the third direction, a height of the insert 110 is consistent with a shoulder height of the first battery cell 10, and a thickness of the insert 110 can be set according to actual needs; for example, a thickness of the insert 110 is 2 mm. The insert 110 may be a solid plate-like structure, or a cavity may be defined within the insert 110, forming a hollow plate-like structure.

Optionally, the insert 110 is adhesively fixed to the first sidewall 111.

Referring to FIG. 22, in some embodiments of this application, the insert 110 and the heat exchange plate 100 form an integrated structural member.

In the above technical solution, the insert 110 and the heat exchange plate 100 are provided as an integrated structural member, which facilitates enhancing the strength of the insert 110 and the heat exchange plate 100, eliminating the connection process between the insert 110 and the heat exchange plate 100, and improving the assembly efficiency of the battery 200, while enhancing the heat transfer efficiency between the insert 110 and the heat exchange plate 100 to some extent.

Optionally, the insert 110 is fixed to the heat exchange plate 100 by welding; of course, a connection method between the insert 110 and the heat exchange plate 100 is not limited thereto.

Of course, in other embodiments, the insert 110 and the heat exchange plate 100 may also be separate structural members.

Referring to FIG. 24 to FIG. 27, in some embodiments of this application, the battery 200 further includes a fixing bracket 120 configured to restrict displacement of each of the first battery cells 10.

In the above technical solution, a fixing bracket 120 configured to restrict displacement of each of the first battery cells 10 is provided to impose a certain limitation on each first battery cell 10, increasing the structural strength between multiple first battery cells 10, facilitating formation of a stable whole by the multiple first battery cells 10, and enhancing a reliability of the battery 200.

Optionally, the fixing bracket 120 may be configured to restrict a displacement of each first battery cell 10 in the first direction X, the second direction Y, and the third direction Z, where the third direction Z is perpendicular to the first direction X and the second direction Y respectively; however, this is not limited thereto. For example, the fixing bracket 120 may also be configured to restrict a displacement of each first battery cell 10 in the first direction X and the second direction Y.

Referring to FIG. 24 to FIG. 27, in some embodiments of this application, the battery 200 includes multiple rows of battery units 10A, each row of battery units 10A includes multiple first battery cells 10, multiple rows of battery units 10A are sequentially arranged in the first direction X, each row of battery units 10A is correspondingly provided with the fixing bracket 120, and multiple first battery cells 10 of each row of battery units 10A are mounted to the fixing bracket 120.

In the above technical solution, each row of battery units 10A is correspondingly provided with the fixing bracket 120, and multiple first battery cells 10 of each row of battery units 10A are mounted to the fixing bracket 120 to match an arrangement of the fixing bracket 120 with the arrangement of the battery units 10A. In this way, the fixing bracket 120 can impose a certain limitation on each first battery cell 10 in each row of battery units 10A, enhancing an overall reliability of the battery 200, while the arrangement of the fixing bracket 120 does not affect the relative arrangement between the first battery cells 10 of two adjacent rows of battery units 10A.

It can be understood that each row of battery units 10A may correspond to one fixing bracket 120; and the battery 200 may include multiple fixing brackets 120, where multiple fixing brackets 120 may be sequentially arranged in the first direction X, and each row of battery units 10A may form a group with a corresponding fixing bracket 120. In this case, if battery units 10A in adjacent rows are arranged offset from each other, the placement of the fixing bracket 120 does not affect an offset arrangement of the adjacent rows of battery units 10A.

As an example, multiple first battery cells 10 in each row of battery units 10A are sequentially arranged in the second direction Y, and the fixing bracket 120 may be arranged in the second direction Y, facilitating assembly of the fixing bracket 120 with each first battery cell 10 in the battery unit 10A.

Optionally, each first battery cell 10 is fixed to the fixing bracket 120 with structural glue, further enhancing a reliability of the battery 200.

Referring to FIG. 24 to FIG. 27, in some embodiments of this application, each fixing bracket 120 includes a connecting bracket 121 and multiple extension brackets 122, where the connecting bracket 121 is provided with multiple clearance openings 121a configured to accommodate poles 12 of the first battery cells 10, the multiple extension brackets 122 are spaced apart and disposed on the connecting bracket 121, each extension bracket 122 is provided with a stopper plate 123, the first battery cell 10 is disposed between adjacent extension brackets 122, and the stopper plate 123 abuts against the first sidewall 111.

In the above technical solution, the connecting bracket 121 is configured with multiple clearance openings 121a to accommodate poles 12 of the first battery cells 10, which allows the poles 12 to fit within the clearance openings 121a, with the poles 12 spaced from a peripheral wall of the clearance openings 121a, preventing interference between the connecting bracket 121 and the poles 12. In addition, a certain spacing is maintained between the poles 12 and the connecting bracket 121, which is conducive to enhancing the insulation performance between the connecting bracket 121 and the poles 12. The first battery cells 10 are placed between adjacent extension brackets 122, facilitating restricting the displacement of corresponding first battery cells 10 in the second direction Y through the two adjacent extension brackets 122, and the extension brackets 122 do not restrict the expansion and deformation of the first battery cells 10 in the first direction, facilitating the normal expansion of the first battery cells 10. The stopper plate 123 abuts against the first sidewall 111, allowing the stopper plate 123 to restrict the displacement of the corresponding first battery cells 10 in the first direction X.

Optionally, each extension bracket 122 has a first battery cell 10 disposed on both sides in the second direction Y. In this case, an outermost first battery cell 10 in the battery unit 10A in the second direction Y may be disposed between one of the extension brackets 122 and an inner wall of the box 30.

Optionally, the clearance opening 121a may also be configured to avoid a pressure relief structure 13 of the first battery cell 10.

Optionally, each extension bracket 122 is provided with stopper plates 123 on two sides in the first direction X, where at least one first battery cell 10 may be disposed between two stopper plates 123 corresponding to the extension bracket 122, enhancing the restriction capability on the first battery cell 10.

Optionally, the stopper plate 123 may abut against one or two first sidewalls 111 of one or two first battery cells 10 corresponding to the extension bracket 122, to restrict multiple first battery cells 10 with a fewer number of stopper plates 123. For example, a first battery cell 10 is disposed on two sides of each extension bracket 122 in the second direction Y, and each stopper plate 123 abuts against the first sidewalls 111 of two adjacent first battery cells 10 corresponding to the extension bracket 122, to allow each stopper plate to restrict a displacement of two adjacent first battery cells 10, which facilitates an appropriate reduction in the number of stopper plates 123. Of course, any two adjacent first battery cells 10 in the battery unit 10A may also have a stopper plate 123 provided on one side in the first direction X, respectively.

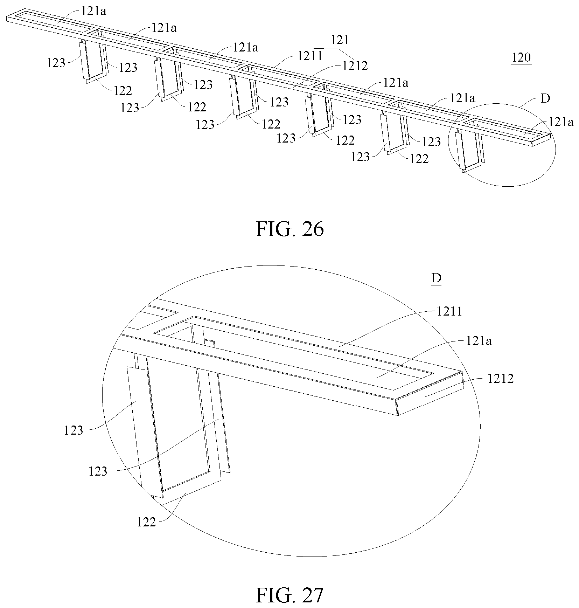

As an example, as shown in FIG. 26 and FIG. 27, the connecting bracket 121 includes a reinforcement plate 1211, where the reinforcement plate 1211 is provided with multiple clearance openings 121a, each clearance opening 121a penetrating the reinforcement plate 1211 in the third direction Z, the third direction Z being perpendicular to the first direction X and the second direction Y respectively; and the reinforcement plate 1211 abuts against a sidewall 11 of the first battery cell 10 on one side in the third direction Z, allowing the reinforcement plate 1211 to restrict the displacement of the first battery cell 10 in the third direction Z. Further, the connecting bracket 121 also includes an enclosure plate 1212, where the enclosure plate 1212 extends annularly around an outer peripheral edge of the reinforcement plate 1211. The enclosure plate 1212 extends from the outer peripheral edge of the reinforcement plate 1211 toward a side where the first battery cell 10 is located, and the enclosure plate 1212 abuts against at least two sidewalls 11 of each first battery cell 10 in the battery unit 10A in the first direction X, allowing the enclosure plate 1212 to restrict a displacement of the first battery cell 10 in the first direction X. Further, the enclosure plate 1212 also abuts against corresponding sidewalls 11 in the second direction Y of the two outermost first battery cells 10 in the battery unit 10A in the second direction Y, allowing the enclosure plate 1212 to restrict the displacement of the entire battery unit 10A in the second direction Y.

According to a second aspect, an embodiment of this application provides an electric apparatus 1000, including the battery 200 described above, where the battery 200 is configured to provide electrical energy.

In the above technical solution, because the electric apparatus 1000 is provided with the battery 200 described above, and the thermal diffusion of the battery 200 is easy to control, it is conducive to enhancing the reliability of use of the electric apparatus 1000.

Referring again to FIG. 3 to FIG. 7, FIG. 12 to FIG. 14, FIG. 18 to FIG. 21, a battery 200 according to specific embodiments of this application is described.

In an embodiment of this application, the battery 200 includes a box 30 and multiple rows of battery units 10A sequentially arranged in a first direction, where all battery units 10A are disposed within the box 30. Each row of battery units 10Aincludes multiple first battery cells 10 sequentially arranged in a second direction, and each first battery cell 10 includes two first sidewalls 111 opposite each other in the first direction and two second sidewalls 112 opposite each other in the second direction. The first sidewalls 111 opposite each other in any two adjacent rows of battery units 10A are arranged offset from each other, and each first battery cell 10 in any two adjacent rows of battery units 10A is arranged offset from a corresponding first battery cell 10 in another row. Two first sidewalls 111 offset from each other are thermally conductively connected, and second sidewalls 112 of any two adjacent first battery cells 10 in each row of battery units 10A are thermally conductively connected. The first direction is parallel to a width direction of the box 30, and the second direction is parallel to a length direction of the box 30.

Multiple partition plates 40 spaced apart in the first direction are provided within the box 30 to define multiple accommodation chambers 30a, and each accommodation chamber 30a containing multiple rows of battery units 10A offset from each other. The partition plate 40 is thermally conductively connected to an adjacent battery unit 10A, and the partition plate 40 is thermally conductively connected to the box 30.

First battery cells 10 offset from each other in adjacent rows are electrically connected through a busbar 50, where the busbar 50 includes a transition portion 51 and two electrical connection portions 52. An extension direction of the transition portion 51 forms an angle with both the first direction X and the second direction Y. A stretchable and deformable buffer portion 53 is connected between each electrical connection portion 52 and the transition portion 51, where the buffer portion 53 includes a bent portion 531 having at least an opening 530, forming the bent portion 531 as a protrusion with the opening 530.

An offset space 30b is provided between adjacent rows of battery units 10A offset from each other and an inner wall of the box 30, with a filler 60 provided within the offset space 30b. The filler 60 includes a second battery cell 61, the second battery cell 61 being electrically connected to the first battery cell 10 at least in series. A chemical system of the second battery cell 61 differs from a chemical system of the first battery cell 10, and a volume of the second battery cell 61 is smaller than a volume of the first battery cell 10. In the second direction Y, a sidewall 11 of the second battery cell 61 is flush with an end face of a battery unit 10A in an adjacent row.

The battery 200 further includes a thermally conductive reinforcement member 70, where the thermally conductive reinforcement member 70 is sandwiched between two adjacent rows of battery units 10A and thermally conductively connected to the first sidewall 111 of the battery unit 10A; and the thermally conductive reinforcement member 70 is also thermally conductively connected to the box 30. A cavity 70a configured to buffer stress is provided within the thermally conductive reinforcement member 70, and a support structure 80 and a heat-absorbing material member 90 are provided within the cavity 70a.

In the above technical solution, heat transferred from a thermally runaway first battery cell 10 to other individual first battery cells 10 can be reduced, thereby suppressing thermal diffusion. In addition, during use of the battery 200, thermal management of the first battery cell 10 can be achieved.

According to some embodiments of this application, this application further provides an electric apparatus 1000, where the electric apparatus 1000 includes the battery 200 of the foregoing embodiments, the battery 200 being configured to provide electrical energy to the electric apparatus 1000.

In the above technical solution, because the electric apparatus 1000 is provided with the battery 200 described above, and a thermal diffusion of the battery 200 is easy to control, it is conducive to enhancing the reliability of use of the electric apparatus 1000.

It should be noted that, without conflict, the embodiments and features in the embodiments in this application may be combined with each other.

The foregoing descriptions are merely preferred embodiments of this application which are not intended to limit this application. Persons skilled in the art understand that this application may have various modifications and variations. Any modifications, equivalent replacements, and improvements made without departing from the spirit and principle of this application shall fall within the protection scope of this application.

## Claims

1. A battery, comprising:
at least two first battery cells, wherein each first battery cell is provided with multiple sidewalls, the multiple sidewalls comprise a first sidewall, the first sidewall is a sidewall with the largest area of the first battery cell, the first sidewalls of at least two first battery cells are arranged opposite each other in a first direction and arranged offset from each other in a second direction, the first direction and the second direction are perpendicularly arranged, and the first direction is perpendicular to the first sidewall.

2. The battery according to claim 1, wherein at least two first sidewalls offset from each other are thermally conductively connected.

3. The battery according to claim 2, wherein a thermally conductive adhesive layer is provided between at least two of the first sidewalls offset from each other.

4. The battery according to any one of claims 1 to 3, wherein, in the second direction, an overlapping area of an overlapping portion between two first battery cells offset from each other is denoted as L1, an area of the first sidewall is denoted as L2, and a ratio of L1 to L2 ranges from 2/9 to 7/9.

5. The battery according to claim 4, wherein the ratio of L1 to L2 ranges from 5/13 to 8/13.

6. The battery according to any one of claims 1 to 5, wherein the battery comprises multiple rows of battery units, each row of battery units comprises multiple first battery cells, multiple rows of battery units are sequentially arranged in the first direction, and the first sidewalls opposite each other in the first direction in at least two adjacent rows of the battery units are arranged offset from each other.

7. The battery according to claim 6, wherein each first battery cell comprises a second sidewall connected to the first sidewall, each first battery cell being thermally conductively connected to an adjacent first battery cell through at least one first sidewall and at least one second sidewall.

8. The battery according to claim 6 or 7, further comprising a box, wherein the multiple rows of battery units are disposed within the box, and the multiple first battery cells in each row of battery units are sequentially arranged in the second direction, the second direction being parallel to a length direction of the box.

9. The battery according to claim 8, wherein partition plates are provided within the box to define multiple accommodation chambers, each accommodation chamber containing at least two rows of battery units offset from each other.

10. The battery according to claim 9, wherein the partition plates are thermally conductively connected to adjacent battery units, and the partition plates are thermally conductively connected to the box.

11. The battery according to any one of claims 6 to 10, wherein the first sidewalls opposite each other in any two adjacent rows of battery units are arranged offset from each other.

12. The battery according to any one of claims 6 to 11, wherein first battery cells offset from each other in adjacent rows are electrically connected through a busbar.

13. The battery according to claim 12, wherein the busbar comprises a transition portion and two electrical connection portions, two ends of the transition portion are connected to the two electrical connection portions respectively, an extension direction of the transition portion forms an angle with both the first direction and the second direction, and the two electrical connection portions are electrically connected to two first battery cells respectively.

14. The battery according to claim 13, wherein the transition portion is provided with a stretchable and deformable buffer portion.

15. The battery according to claim 13 or 14, wherein a stretchable and deformable buffer portion is connected between each electrical connection portion and the transition portion.

16. The battery according to claim 14 or 15, wherein the buffer portion comprises a bent portion having at least an opening.

17. The battery according to any one of claims 13 to 16, wherein the transition portion is provided with a reinforcement member, the reinforcement member being a member made of conductive material.

18. The battery according to claim 17, wherein the reinforcement member and the transition portion are arranged in a stacked manner.

19. The battery according to any one of claims 6 to 18, further comprising a box, wherein multiple rows of battery units are disposed within the box, and an offset space is provided between adjacent rows of battery units offset from each other and an inner wall of the box, with a filler provided within the offset space.

20. The battery according to claim 19, wherein the filler comprises a second battery cell, the second battery cell is disposed in the offset space, and the second battery cell is electrically connected to the first battery cell.

21. The battery according to claim 20, wherein a volume of the second battery cell is smaller than a volume of the first battery cell.

22. The battery according to claim 20 or 21, wherein in the second direction, a sidewall of the second battery cell is flush with an end face of a battery unit in an adjacent row.

23. The battery according to any one of claims 20 to 22, wherein the first battery cell and the second battery cell are electrically connected at least in series, and a chemical system of the second battery cell differing from a chemical system of the first battery cell.

24. The battery according to any one of claims 19 to 23, wherein the filler comprises a monitor configured to monitor the operating status of each of the first battery cells.

25. The battery according to any one of claims 19 to 24, wherein the filler comprises a thermally conductive filler member thermally conductively connected to the box, the thermally conductive filler member being configured to direct heat from a corresponding first battery cell to the box.

26. The battery according to any one of claims 1 to 25, further comprising a thermally conductive reinforcement member and a box, wherein at least two first battery cells are disposed within the box, at least one first battery cell is thermally conductively connected to the thermally conductive reinforcement member, and the thermally conductive reinforcement member is thermally conductively connected to the box.

27. The battery according to claim 26, wherein the thermally conductive reinforcement member is sandwiched between first battery cells opposite each other in the first direction, and the thermally conductive reinforcement member is thermally conductively connected to the first sidewalls of corresponding first battery cells.

28. The battery according to claim 27, wherein a cavity configured to buffer stress is provided within the thermally conductive reinforcement member.

29. The battery according to claim 28, wherein the thermally conductive reinforcement member comprises two thermally conductive sidewalls opposite each other, the thermally conductive sidewall is thermally conductively connected to the opposite first sidewalls, and a support structure connected to the two thermally conductive sidewalls is provided within the cavity.

30. The battery according to claim 29, wherein the support structure is formed as a mesh structure, and a heat-absorbing material member is filled within the mesh structure.

31. The battery according to any one of claims 1 to 30, further comprising a heat exchange plate and a thermally conductive insert, wherein in a third direction, the heat exchange plate is located on one side of at least two first battery cells, the third direction being perpendicular to the first direction and the second direction respectively; and
a heat exchange channel configured to accommodate a heat exchange medium is provided within the heat exchange plate, and the insert is disposed on a surface of the heat exchange plate close to the first battery cell and thermally conductively connected to the first battery cell.

32. The battery according to claim 31, wherein the first sidewall of at least one of the first battery cells is thermally conductively connected to the insert.

33. The battery according to claim 31 or 32, wherein the insert and the heat exchange plate form an integrated structural member.

34. The battery according to any one of claims 1 to 33, further comprising a fixing bracket configured to restrict displacement of each of the first battery cells.

35. The battery according to claim 34, wherein the battery comprises multiple rows of battery units, each row of battery units comprises multiple first battery cells, multiple rows of battery units are sequentially arranged in the first direction, each row of battery units is correspondingly provided with the fixing bracket, and the multiple first battery cells of each row of battery units are mounted to the fixing bracket.

36. The battery according to claim 35, wherein each fixing bracket comprises:
a connecting bracket, wherein the connecting bracket is provided with multiple clearance openings configured to accommodate poles of the first battery cells; and
multiple extension brackets, wherein the multiple extension brackets are spaced apart and disposed on the connecting bracket, each extension bracket is provided with a stopper plate, the first battery cell is disposed between adjacent extension brackets, and the stopper plate abuts against the first sidewall.

37. An electric apparatus, comprising the battery according to any one of claims 1 to 36, wherein the battery is configured to provide electrical energy.
